# EUROPEAN PATENT APPLICATION

(11) **EP 4 715 448 A1**
(43) Date of publication of application: **25.03.2026**
(21) Application number: 24839874.5
(22) Date of filing: 30.04.2024
(51) Int. Cl.: G02B 27/01, G06F 1/16

(54) **ELECTRONIC DEVICE INCLUDING STRUCTURE FOR SUPPORTING PART OF BODY OF USER**

(30) Priority: 07.07.2023 KR 20230088707; 09.08.2023 KR 20230104457
(71) Applicant: Samsung Electronics Co., Ltd., Suwon-si, Gyeonggi-do 16677 (KR)
(72) Inventor: KIM, Gyeongtae, Suwon-si Gyeonggi-do 16677 (KR); SEOK, Sangyoup, Suwon-si Gyeonggi-do 16677 (KR); SHIM, Heebo, Suwon-si Gyeonggi-do 16677 (KR); LEE, Dongoh, Suwon-si Gyeonggi-do 16677 (KR); LEE, Seunghoon, Suwon-si Gyeonggi-do 16677 (KR); LEE, Changmin, Suwon-si Gyeonggi-do 16677 (KR)
(74) Representative: Gulde & Partner
(86) International application number: PCT/KR2024/005861
(87) International publication number: WO 2025/014057

(57) **Abstract**

An electronic device is provided. The electronic device comprises: a housing; a support member which is exposed to the outside of the housing, and supports a part of the body of a user while the electronic device is worn by the user; a plurality of coupling members which are spaced apart from each other along a first axis, have at least some thereof accommodated in the housing, couple the support member to the housing, and can be moved toward the inside or the outside of the housing; and a plurality of deformable members which are in contact with each of the plurality of coupling members in the housing so as to be deformable by the movement of the support member with respect to the housing, wherein the support member pivots with respect to the housing around the first axis or tilts with respect to the housing as a first deformable member from among the plurality of deformable members is compressed differently from a second deformable member by the movement of the support member.

## Description

### [Technical Field]

The present disclosure relates to an electronic device including a structure for supporting a part of a user's body.

### [Background Art]

An electronic device may be used in various environments. For example, the electronic device may include a wearable device used in a state of being worn by a user. In a case of an electronic device worn by the user, the electronic device may include a structure capable of supporting a part of a user's body while being worn by the user.

### [Disclosure]

### [Technical Solution]

An electronic device is provided. According to an embodiment, the electronic device may include a housing. According to an embodiment, the electronic device may include a support exposed to the outside of the housing and supporting a part of a user's body while the electronic device is worn by the user. According to an embodiment, the electronic device may include a plurality of coupling members spaced apart from each other along a first axis, coupling the support to the housing, and movable toward the inside or the outside of the housing, the plurality of coupling members at least partially accommodated in the housing. According to an embodiment, the electronic device may include a plurality of deforming members deformable by a movement of the support with respect to the housing by contacting each of the plurality of coupling members in the housing. According to an embodiment, the support may be configured to pivot with respect to the housing with respect to the first axis, or tilt with respect to the housing, as a first deforming member of the plurality of deforming members is compressed differently from a second deforming member of the plurality of deforming members by the movement of the support.

A wearable device is provided. According to an embodiment, the wearable device may include a housing. According to an embodiment, the wearable device may include a support exposed to the outside of the housing and supporting a part of a user's body while the wearable device is worn by the user. According to an embodiment, the wearable device may include a plurality of coupling members spaced apart from each other along a first axis, coupling the support to the housing, and movable linearly with respect to the housing with respect to a second axis perpendicular to the first axis, and at least a part of the plurality of coupling members is accommodated in the housing. According to an embodiment, the wearable device may include a plurality of deforming members deformable by a movement of the support with respect to the housing by contacting each of the plurality of coupling members in the housing. According to an embodiment, the support may be configured to rotate with respect to the housing with respect to the first axis, or yaw with respect to the housing with respect to the second axis, as a first deforming member of the plurality of deforming members is compressed differently from a second deforming member of the plurality of deforming members by the movement of the support.

### [Description of the Drawings]

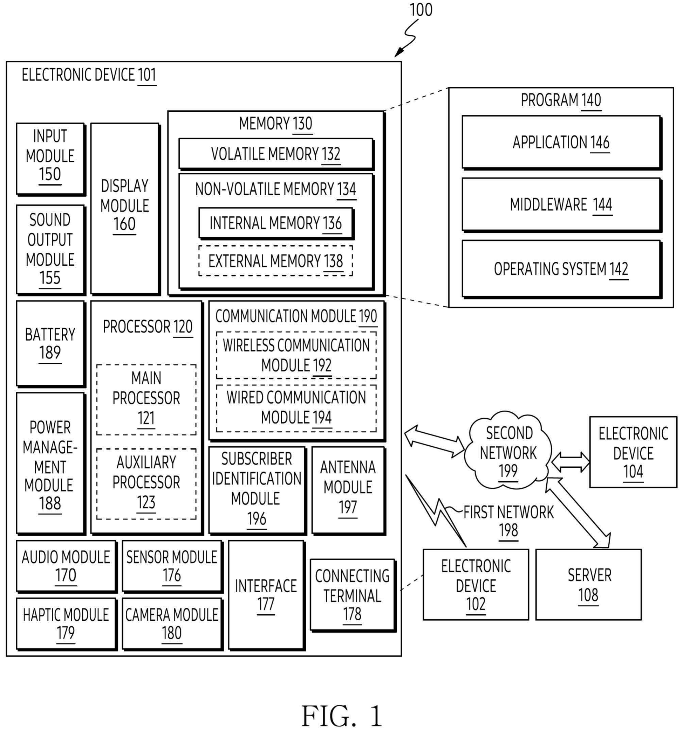

∘ FIG. 1 is a block diagram of an electronic device in a network environment according to various embodiments.
FIG. 2A is a perspective view of an exemplary electronic device according to an embodiment.
FIG. 2B is a perspective view of an exemplary electronic device according to an embodiment.
FIG. 2C illustrates a state in which an exemplary electronic device according to an embodiment is worn by a user.
FIG. 3A is an exploded perspective view of an exemplary electronic device according to an embodiment.
FIG. 3B is an exploded perspective view indicating a relationship between components in a first housing of an exemplary electronic device according to an embodiment.
FIG. 4A is a top view of an exemplary second housing and support according to an embodiment.
FIG. 4B is an exploded view of an exemplary second housing and support according to an embodiment.
FIG. 4C is a perspective view illustrating an exemplary second housing according to an embodiment.
FIG. 4D is a perspective view illustrating an exemplary support according to an embodiment.
FIG. 4E is a perspective view illustrating an exemplary coupling member according to an embodiment.
FIG. 4F is a perspective view illustrating an exemplary bracket according to an embodiment.
FIG. 5A is a cross-sectional view illustrating an example in which an exemplary second housing and support according to an embodiment are cut along line A-A' of FIG. 4A.
FIG. 5B is a cross-sectional view illustrating a state in which an exemplary support according to an embodiment is rotated with respect to a second housing.
FIG. 6A is a cross-sectional view illustrating an example of cutting an exemplary support and second housing according to an embodiment.
FIG. 6B is a cross-sectional view illustrating a state in which an exemplary support according to an embodiment is tilted with respect to a second housing.
FIG. 7A is a cross-sectional view illustrating an example of cutting an exemplary support and second housing according to an embodiment.
FIG. 7B is a cross-sectional view illustrating a state in which an exemplary support according to an embodiment is rotated with respect to a second housing.
FIG. 7C is a perspective view illustrating an exemplary coupling member according to an embodiment.
FIGS. 8A to 8D indicate an example of a method to which an exemplary coupling member and second housing according to an embodiment are coupled.
FIG. 9A is a cross-sectional view illustrating an example of cutting an exemplary support and second housing according to an embodiment.
FIG. 9B is a perspective view illustrating an exemplary coupling member according to an embodiment.
FIG. 9C is a perspective view illustrating an example to which an exemplary coupling member, second housing, and support according to an embodiment are coupled.

### [Mode for Invention]

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

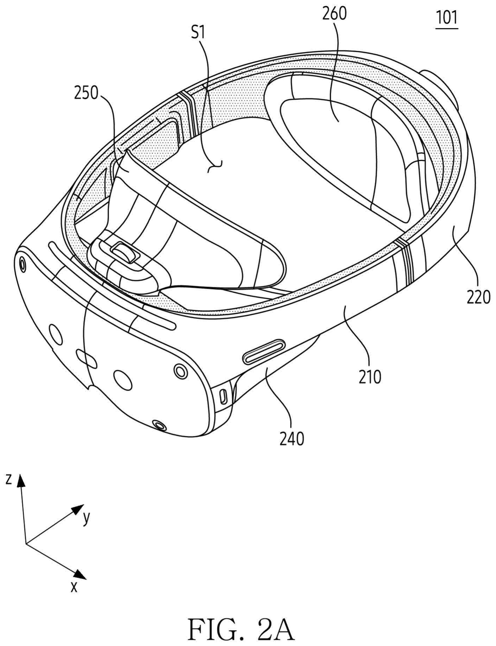

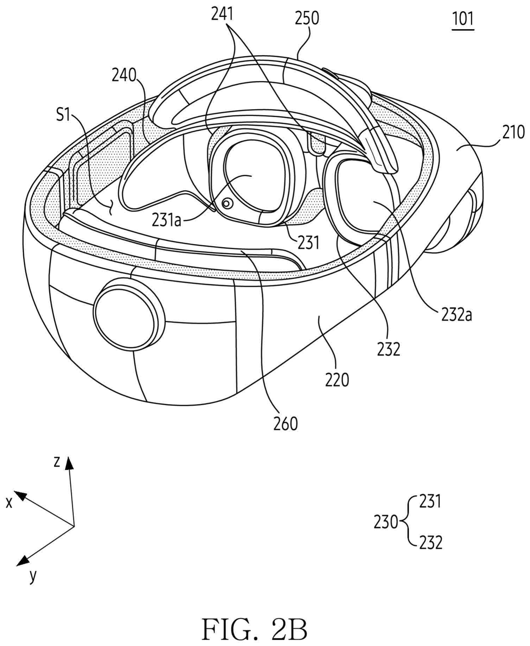

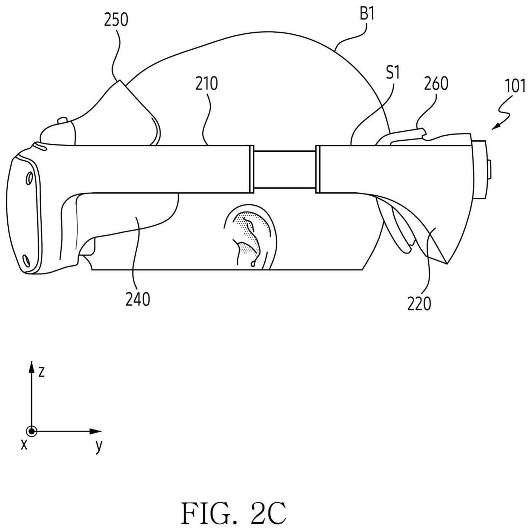

FIG. 2A is a perspective view of an exemplary electronic device according to an embodiment, and FIG. 2B is a perspective view of an exemplary electronic device according to an embodiment. FIG. 2C illustrates a state in which an exemplary electronic device according to an embodiment is worn by a user.

Referring to FIGS. 2A, 2B, and 2C, according to an embodiment, the electronic device 101 may include a first housing 210, a second housing 220, a plurality of lens supports 230, a cover 240, a first pad 250, and/or a second pad 260. According to an embodiment, the electronic device 101 may be referred to as a wearable device worn on a part b1 of a user's body. For example, the electronic device 101 may be worn on the user's head.

According to an embodiment, the electronic device 101 may be configured to provide a user with augmented reality (AR), virtual reality (VR), or mixed reality (MR) in which the AR and the VR are mixed. For example, the electronic device 101 may be configured to provide virtual reality (or virtual space) to the user, based on receiving data about an image from the outside of the electronic device 101. The virtual reality may be represented based on two dimensions and/or three dimensions. For example, the image provided by the electronic device 101 may include a still image and/or video for implementing virtual reality. For example, the electronic device 101 may be configured to provide AR to the user, by superimposing a virtual object on a real image representing an external environment of the electronic device 101. The real image may correspond to the external environment. The virtual object may include at least one of text and an image corresponding to various information related to an object included in the real image. However, the present disclosure is not limited thereto, and the virtual object may include at least one of text and an image corresponding to various information related to another object distinguished from the object included in the real image. For example, the electronic device 101 may be referred to as at least one of a virtual reality (VR) device and a mixed reality (MR) device. For example, since the electronic device 101 may be usable in a state of being worn on the user's head, it may be referred to as a head mounted display device (HMD device).

According to an embodiment, a first housing 210 may form or define a portion of an outer surface of the electronic device 101. The first housing 210 may form or define a portion of a space in which various components of the electronic device 101 may be disposed. The first housing 210 may support various components of the electronic device 101. For example, the plurality of lens supports 230, the cover 240, and/or the first pad 250 may be coupled to the first housing 210. The first housing 210 may surround (or cover) a part b1 of a body of a user in a state in which the electronic device 101 is worn by the user. For example, the first housing 210 may at least partially accommodate the part b1 of the body of the user in the state in which the electronic device 101 is worn by the user. For example, the first housing 210 may be in contact with the part b1 of the body of the user in the state in which the electronic device 101 is worn by the user, but is not limited thereto. For example, the first housing 210 may be referred to as a main housing. For example, the first housing 210 may be referred to as a frame because it provides an overall framework of the electronic device 101.

According to an embodiment, a second housing 220 may form or define another portion of the outer surface of the electronic device 101. The second housing 220 may form or define another portion of the space in which various components of the electronic device 101 may be disposed. The second housing 220 may support various components of the electronic device 101. For example, the second housing 220 may support the second pad 260. For example, the second pad 260 may be disposed on the second housing 220. The second housing 220 may surround (or cover) the part b1 of the body of the user in a state in which the electronic device 101 is worn by the user. For example, the second housing 220 may at least partially accommodate the part b1 of the body of the user in the state in which the electronic device 101 is worn by the user. For example, the second housing 220 may be in contact with the part b1 of the body of the user in the state in which the electronic device 101 is worn by the user, but is not limited thereto. The second housing 220 may be movable with respect to the first housing 210. For example, the second housing 220 may be movable with respect to the first housing 210 so that the part b1 of the body of the user is accommodated in a space s1 between the first housing 210 and the second housing 220. For example, the second housing 220 may be movable with respect to the first housing 210 so as to approach the first housing 210 or move away from the first housing 210. As the second housing 220 is movable with respect to the first housing 210, a size of the space s1 between the first housing 210 and the second housing 220 may be adjusted (or changed) to correspond to a size of the part b1 of the body of the user. For example, the second housing 220 may be referred to as a sub-housing. For example, the second housing 220 may be referred to as a band housing.

According to an embodiment, each of the plurality of lens supports 230 may correspond to eyes of a user of the electronic device 101 in a state in which the electronic device 101 is worn by the user. For example, each of the plurality of lens supports 230 may be aligned with the eyes of the user in the state in which the electronic device 101 is worn by the user. Each of the plurality of lens supports 230 may face the eyes of the user in the state in which the electronic device 101 is worn by the user. Each of the plurality of lens supports 230 may be coupled to the first housing 210. For example, a portion of each of the plurality of lens supports 230 may be disposed (or accommodated) in the inside the first housing 210. For example, another portion of each of the plurality of lens supports 230 may protrude to the outside of the first housing 210. The plurality of lens supports 230 may include a first lens support 231 and a second lens support 232.

According to an embodiment, the first lens support 231 may be movable with respect to the first housing 210 to face the eyes of the user. For example, the first lens support 231 may be movable with respect to the first housing 210 so as to approach the second lens support 232 or move away from the second lens support 232. The first lens support 231 may be coupled to a first lens 231a. The first lens 231a may refract (or distort) light emitted from at least one display of the electronic device 101 so that the electronic device 101 may provide virtual reality. The first lens 231a may be exposed to the outside of the first housing 210. The first lens 231a may be disposed outside the first housing 210.

According to an embodiment, the second lens support 232 may be movable with respect to the first housing 210 to face the eyes of the user. For example, the second lens support 232 may be movable with respect to the first housing 210 so as to approach the first lens support 231 or move away from the first lens support 231. As the first lens support 231 and the second lens support 232 are movable with respect to each other, a distance between a first lens 231a and a second lens 232a may be adjusted to correspond to an inter pupillary distance (IPD) of the user. The second lens support 232 may be coupled to the second lens 232a. The second lens 232a may refract (or distort) light emitted from at least one display of the electronic device 101 so that the electronic device 101 may provide virtual reality. The second lens 232a may be exposed to the outside of the first housing 210. The second lens 232a may be disposed outside the first housing 210.

According to an embodiment, the cover 240 may decrease (or suppress) light passing through the first lens 231a and the second lens 232a from being dispersed to the outside of the cover 240 in a state in which the electronic device 101 is worn by the user. As the cover 240 decreases transmission of the light passing through the first lens 231a and the second lens 232a to the outside of the cover 240, an environment in which the user of the electronic device 101 may be immersed in virtual reality may be provided. The cover 240 may cover (or surround) the part b1 of the body of the user in the state in which the electronic device 101 is worn by the user. For example, the cover 240 may be in contact with the part b1 of the body of the user in the state in which the electronic device 101 is worn by the user. The cover 240 may be disposed on the first housing 210. For example, the cover 240 may be disposed on a surface of the first housing 210 facing the part b1 of the body of the user in the state in which the electronic device 101 is worn by the user. The cover 240 may be penetrated by the first lens support 231 and the second lens support 232. For example, the cover 240 may include a plurality of holes 241 accommodating each of the first lens support 231 and the second lens support 232. For example, the cover 240 may be referred to as a face cover because it covers a face of the user while the electronic device 101 is worn by the user.

According to an embodiment, the first pad 250 may support the electronic device 101 while the electronic device 101 is worn by the user. The first pad 250 may maintain a position of the electronic device 101 with respect to the part b1 of the body of the user while the electronic device 101 is worn by the user. For example, the first pad 250 may be in contact with a forehead of the user in a state in which the electronic device 101 is worn by the user. The first pad 250 may be coupled to the first housing 210. The first pad 250 may be disposed on the first housing 210. According to an embodiment, the first pad 250 may be movable with respect to the first housing 210. For example, the first pad 250 may be rotatable (or tiltable) with respect to the first housing 210. As the first pad 250 is movable with respect to the first housing 210, a posture (or an angle) of the first pad 250 with respect to the first housing 210 may be adjusted (or changed). As the posture of the first pad 250 with respect to the first housing 210 is changed, the first pad 250 may be stably in contact with the forehead of the user. For example, the first pad 250 may be referred to as a front pad (or a front cushion) because it supports the forehead of the user while the electronic device 101 is worn by the user.

According to an embodiment, the second pad 260 may support the electronic device 101 while the electronic device 101 is worn by the user. The second pad 260 may maintain a position of the electronic device 101 with respect to the part b1 of the body of the user while the electronic device 101 is worn by the user. For example, the second pad 260 may be in contact with a back of a head of the user in a state in which the electronic device 101 is worn by the user. The second pad 260 may be coupled to the second housing 220. The second pad 260 may be disposed on the second housing 220. For example, the second pad 260 may be disposed on a surface of the second housing 220 facing the part b1 of the body of the user in a state in which the electronic device 101 is worn by the user. According to an embodiment, the second pad 260 may be movable with respect to the second housing 220. For example, the second pad 260 may be rotatable (or tiltable, or pivotable) with respect to the second housing 220. As the second pad 260 is movable with respect to the second housing 220, a posture (or an angle) of the second pad 260 with respect to the second housing 220 may be adjusted (or changed). As the posture of the second pad 260 with respect to the second housing 220 is changed, the second pad 260 may be stably in contact with the back of the head of the user. For example, the second pad 260 may be referred to as a rear pad (or a rear cushion) because it supports the back of the head of the user while the electronic device 101 is worn by the user.

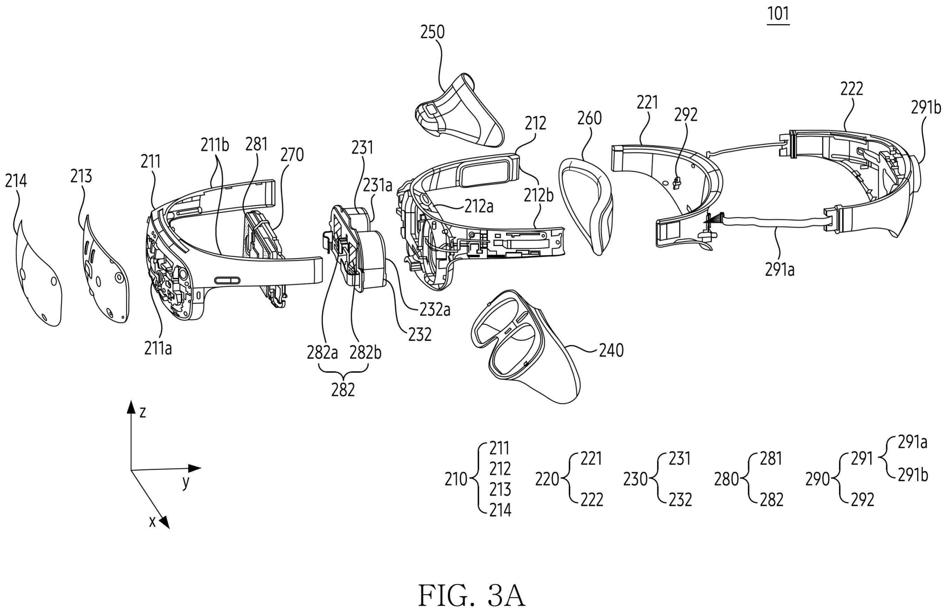

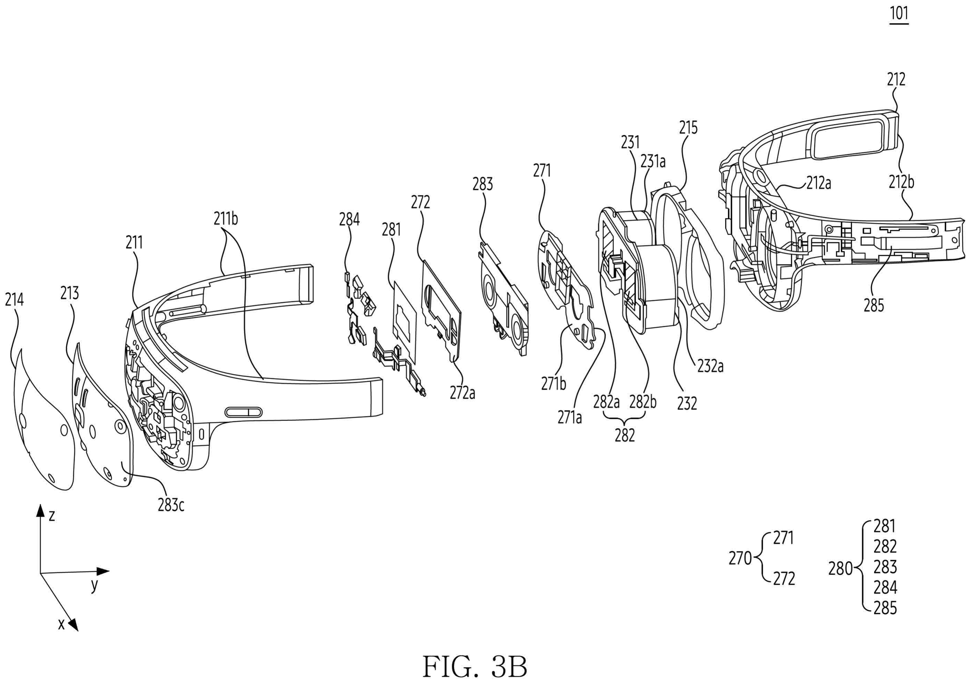

FIG. 3A is an exploded perspective view of an exemplary electronic device according to an embodiment and FIG. 3B is an exploded perspective view indicating a relationship between components in a first housing of an exemplary electronic device according to an embodiment.

Referring to FIGS. 3A and 3B, according to an embodiment, an electronic device 101 may further include at least one bracket 270, an electronic component 280, and/or a plurality of adjustment modules 290.

According to an embodiment, the at least one bracket 270 may support a component disposed in a first housing 210. For example, the at least one bracket 270 may support a printed circuit board 281. The at least one bracket 270 may be disposed in the first housing 210. For example, the at least one bracket 270 may be covered by the first housing 210. According to an embodiment, the at least one bracket 270 may include a first bracket 271 and a second bracket 272.

According to an embodiment, the first bracket 271 may support a first lens support 231 and a second lens support 232. The first lens support 231 and the second lens support 232 may be movable with respect to the first bracket 271. For example, a surface 271a of the first bracket 271 may face the first lens support 231 and the second lens support 232. Another surface 271b of the first bracket 271 opposite to the surface 271a of the first bracket 271 may face the second bracket 272. For example, a direction (e.g., a -y direction) in which the other surface 271b of the first bracket 271 faces may be opposite to a direction (e.g., a +y direction) in which the surface 271a of the first bracket 271 faces.

According to an embodiment, the second bracket 272 may be fastened in the first housing 210. For example, the second bracket 272 may be fastened in the first housing 210 by being fastened to the first bracket 271, but is not limited thereto. The second bracket 272 may face and be spaced away from the other surface 271b of the first bracket 271.

According to an embodiment, the electronic component 280 may implement various functions of the electronic device 101. For example, the electronic component 280 may include the printed circuit board 281, at least one display 282, at least one fan 283, at least one camera 284, and/or a speaker module 285. However, it is not limited thereto. For example, the electronic component 280 may include various electronic components in addition to the above-described example.

According to an embodiment, the printed circuit board 281 may form (or establish) an electrical connection between electronic components in the electronic device 101. The printed circuit board 281 may support at least some of the electronic components in the electronic device 101. For example, the printed circuit board 281 may support a processor (e.g., the processor 120 of FIG. 1) of the electronic device 101. The processor 120 may be disposed on the printed circuit board 281. The printed circuit board 281 may be disposed in the first housing 210. The printed circuit board 281 may be disposed on the at least one bracket 270. For example, the printed circuit board 281 may be disposed on a surface 272a of the second bracket 272.

According to an embodiment, the at least one display 282 may be configured to provide visual content. The at least one display 282 may be disposed in the first housing 210. For example, the at least one display 282 may be disposed on the first bracket 271. For example, the at least one display 282 may face the surface 271a of the first bracket 271. According to an embodiment, the at least one display 282 may be movable with respect to the first housing 210. For example, the at least one display 282 may include a first display 282a coupled to the first lens support 231 and a second display 282b coupled to the second lens support 232. The first display 282a may be disposed on the first lens support 231. The first display 282a may emit light toward a first lens 231a. The light emitted from the first display 282a may be transmitted to a user by passing through the first lens 231a. The second display 282b may be disposed on the second lens support 232. The second display 282b may emit light toward a second lens 232a. The light emitted from the second display 282b may be transmitted to the user by passing through the second lens 232a. However, it is not limited thereto. For example, the at least one display 282 may also include only one display disposed on the surface 271a of the first bracket 271.

According to an embodiment, the at least one fan 283 may generate airflow for emitting heat generated in the inside of the electronic device 101 to the outside of the electronic device 101. For example, the at least one fan 283 may emit (or transmit) heat generated from the at least one electronic component 280 to the outside of the first housing 210 by generating the airflow. The at least one fan 283 may be disposed on the other surface 271b of the first bracket 271. For example, the at least one fan 283 may be coupled (or fastened) to the second bracket 272.

According to an embodiment, the at least one camera 284 may obtain an image based on receiving light from the outside of the electronic device 101. The at least one camera 284 may be disposed in the first housing 210. The at least one camera 284 may include a plurality of cameras oriented to different directions. For example, the at least one camera 284 may include a gaze tracking camera oriented to a user's eye so as to track a gaze of the user wearing the electronic device 101. For example, the at least one camera 284 may include an external camera oriented to the outside of the electronic device 101 so that the electronic device 101 may provide virtual reality by obtaining an image from the outside. The external camera may obtain an image for identifying a user's gesture of the electronic device 101 and/or a reality image of the outside of the electronic device 101.

According to an embodiment, the speaker module 285 may be configured to provide audible content to the user of the electronic device 101. The speaker module 285 may be disposed in the first housing 210. A position of the speaker module 285 may correspond to a user's ear in a state in which the electronic device 101 is worn by the user. For example, the position of the speaker module 285 may be aligned with the user's ear in the state in which the electronic device 101 is worn by the user.

According to an embodiment, the plurality of adjustment modules 290 may include a first adjustment module 291 and a second adjustment module 292.

According to an embodiment, the first adjustment module 291 may couple a second housing 220 and the first housing 210 so that the second housing 220 is movable with respect to the first housing 210. A distance between the second housing 220 and the first housing 210 may be adjusted (changed) by the first adjustment module 291. The first adjustment module 291 may include a band 291a and a first knob 291b. The band 291a may be disposed in the first housing 210 and the second housing 220. The band 291a may extend from the second housing 220 to the first housing 210. The band 291a may be operated through the first knob 291b exposed to the outside of the second housing 220. At least a part of the band 291a may be exposed to the outside of the electronic device 101 by a movement of the second housing 220 with respect to the first housing 210, or may be covered by the first housing 210 and the second housing 220. For example, the at least a part of the band 291a may be exposed to the outside of the electronic device 101 as the user adjusts the distance to increase the distance between the first housing 210 and the second housing 220 through the knob 291b. For example, the at least a part of the band 291a may be covered by the first housing 210 and the second housing 220 as the user adjusts the distance to decrease the distance between the first housing 210 and the second housing 220 through the knob 291b.

According to an embodiment, the second adjustment module 292 may couple a second pad 260 to the second housing 220 so that the second pad 260 is movable with respect to the second housing 220. For example, at least a part of the second adjustment module 292 may be exposed to the outside of the second housing 220.

According to an embodiment, the first housing 210 may include a first case 211, a second case 212, a front panel 213, and/or a visor 214. The first case 211, the second case 212, the front panel 213, the visor 214, and a lens bracket 215 may be coupled to each other. The first case 211, the second case 212, the front panel 213, the visor 214, and the lens bracket 215 may form (or define) the first housing 210 by being coupled to each other.

According to an embodiment, the first case 211 may include a first support portion 211a and/or at least one band portion 211b.

According to an embodiment, the first support portion 211a may face the printed circuit board 281. The printed circuit board 281 may be disposed on (or in) the first support portion 211a. For example, the printed circuit board 281 may be disposed (or interposed) between the first support portion 211a and the at least one bracket 270. For example, a first pad 250 may be disposed on the first support portion 211a.

According to an embodiment, the at least one first band portion 211b may cover (or surround) a part (e.g., the part b1 of the user's body of FIG. 2C) of a user's body in the state in which the electronic device 101 is worn by the user. The at least one first band portion 211b may have a shape extending from the first support portion 211a. For example, the at least one first band portion 211b may extend along a direction away from the first support portion 211a. For example, the at least one first band portion 211b may include a plurality of first band portions spaced apart from each other, but is not limited thereto.

According to an embodiment, the second case 212 may include a second support portion 212a and/or at least one second band portion 212b.

According to an embodiment, the second support portion 212a may be coupled to the first support portion 211a. For example, a shape of the second support portion 212a may correspond to a shape of the first support portion 211a. The first support portion 211a and the second support portion 212a may provide a space in which components of the electronic device 101 may be disposed, by being coupled to each other. For example, the at least one bracket 270, the printed circuit board 281, and a part of each of a plurality of lens supports 230 may be disposed between the first support portion 211a and the second support portion 212a. The second support portion 212a may include a plurality of lens openings through which another part of each of the plurality of lens supports 230 passes. The other part of each of the plurality of lens supports 230 may be exposed to the outside of the first housing 210 by penetrating the plurality of lens openings. The second support portion 212a may support a first cover 240. For example, the first cover 240 may be disposed on the second support portion 212a.

According to an embodiment, the at least one second band portion 212b may be coupled to the at least one first band portion 211b. For example, a shape of the at least one second band portion 212b may correspond to a shape of the at least one first band portion 211b. For example, the at least one second band portion 212b may include a plurality of second band portions spaced apart from each other, but is not limited thereto. A part of the band 291a may be disposed in the at least one first band portion 211b and the at least one second band portion 212b. A part of the band 291a may be surrounded (or covered) by the at least one first band portion 211b and the at least one second band portion 212b.

According to an embodiment, the front panel 213 may cover at least a part of the components in the first housing 210 so that the components in the first housing 210 are not visible from the outside. The front panel 213 may be disposed on the first housing 210. For example, the front panel 213 may be disposed on the first support portion 211a of the first housing 210.

According to an embodiment, the visor 214 may be disposed on the first housing 210. The visor 214 may be disposed on the front panel 213. For example, at least a part of the visor 214 may be formed of a substantially transparent or substantially translucent material so that a camera (e.g., the camera module 180 of FIG. 1) of the electronic device 101 may receive light from the outside of the electronic device 101, but is not limited thereto.

According to an embodiment, the at least one display 282 may include a cover display 282c. The cover display 282c may be visible by another user other than the user of the electronic device 101. For example, the cover display 282c may display an image associated with a facial expression of the user obtained through the camera 284 so that the other user other than the user of the electronic device 101 may view the facial expression of the user of the electronic device 101. The cover display 282c may be disposed on the first housing 210. The cover display 282c may be exposed to the outside of the first housing 210. For example, the cover display 282c may be disposed between the front panel 213 and the visor 214. However, it is not limited thereto. For example, the cover display 282c may be covered (or surrounded) by the visor 214 by being inserted into the visor 214, or may be covered (or surrounded) by the front panel 213 by being inserted into the front panel 213. For example, the cover display 282c may be disposed between the front panel 213 and the first case 211.

According to an embodiment, the lens bracket 215 may be coupled to the second case 212 and the plurality of lens supports 230 so that the plurality of lens supports 230 may be stably disposed in the first housing 210. For example, the lens bracket 215 may be inserted into the second case 212. For example, the lens bracket 215 may surround (or cover) each of the plurality of lens supports 230.

According to an embodiment, the second housing 220 may include a third case 221 and/or a fourth case 222. The third case 221 and the fourth case 222 may be coupled to each other. The third case 221 and the fourth case 222 may form (or define) the second housing 220 by being coupled to each other.

According to an embodiment, the third case 221 may face the second case 212. The third case 221 may support the second pad 260. The second pad 260 may be disposed on the third case 221. A part of the second adjustment module 292 may protrude (or be exposed) to the outside of the third case 221.

According to an embodiment, the fourth case 222 may be coupled to the third case 221. Another part of the band 291a may extend in the third case 221 and the fourth case 222. The knob 291b may protrude to the outside of the fourth case 222.

For example, since the electronic device 101 is worn by the user, the electronic device 101 may need a structure for supporting a part b1 of the user's body. Hereinafter, the structure for supporting the part b1 of the user's body will be described.

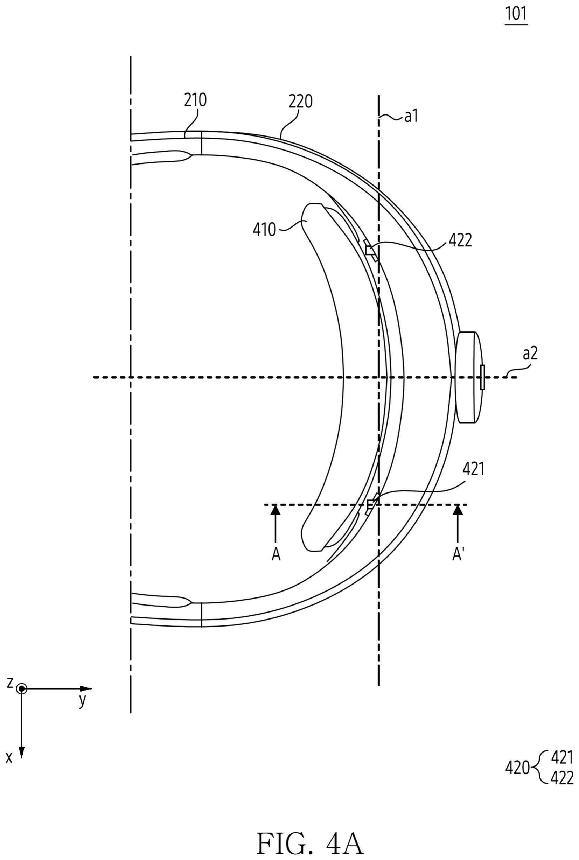

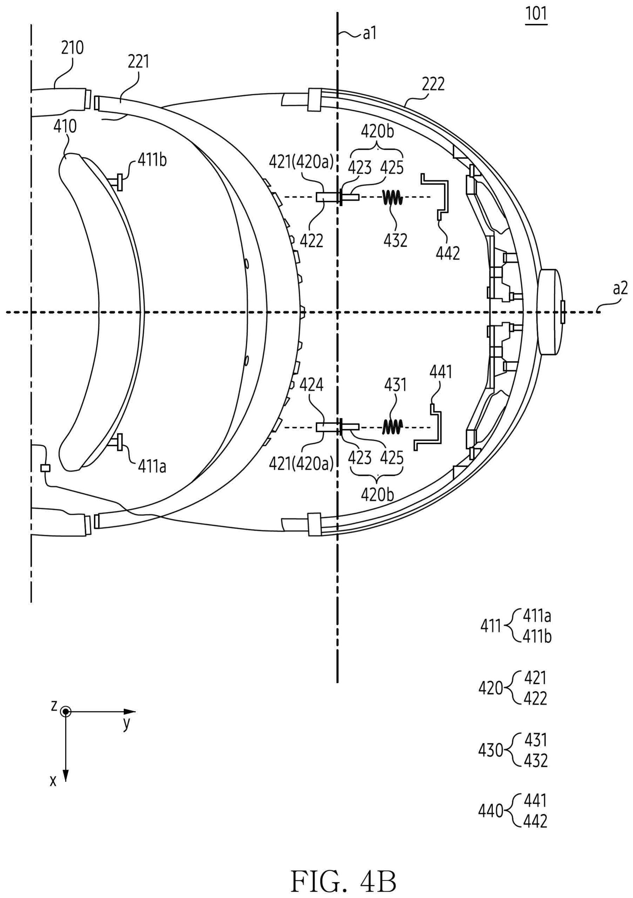

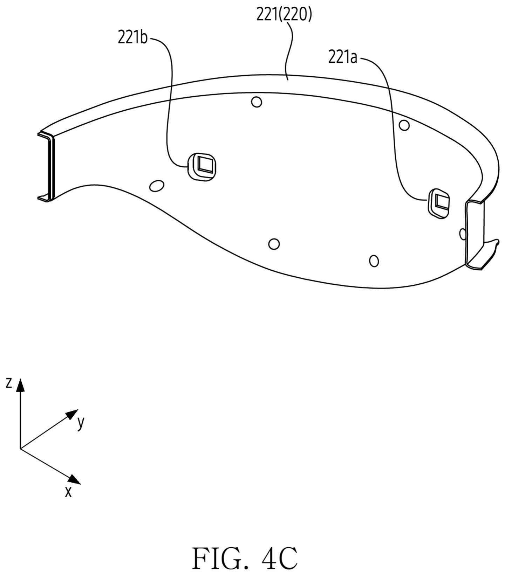

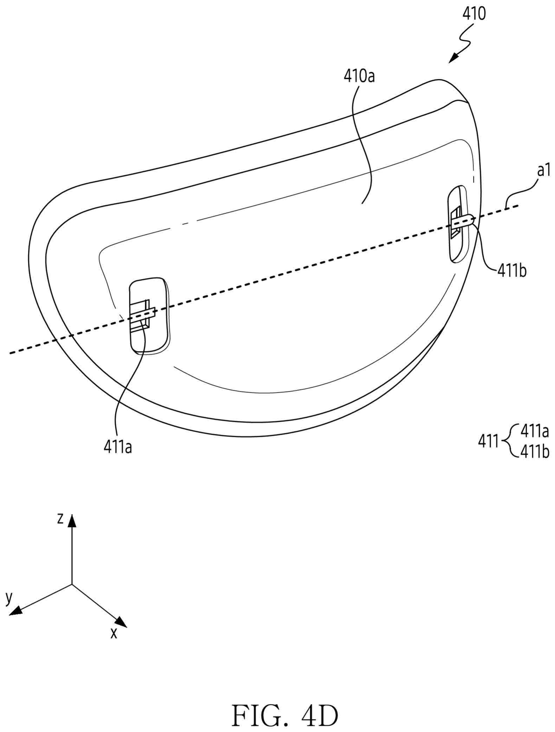

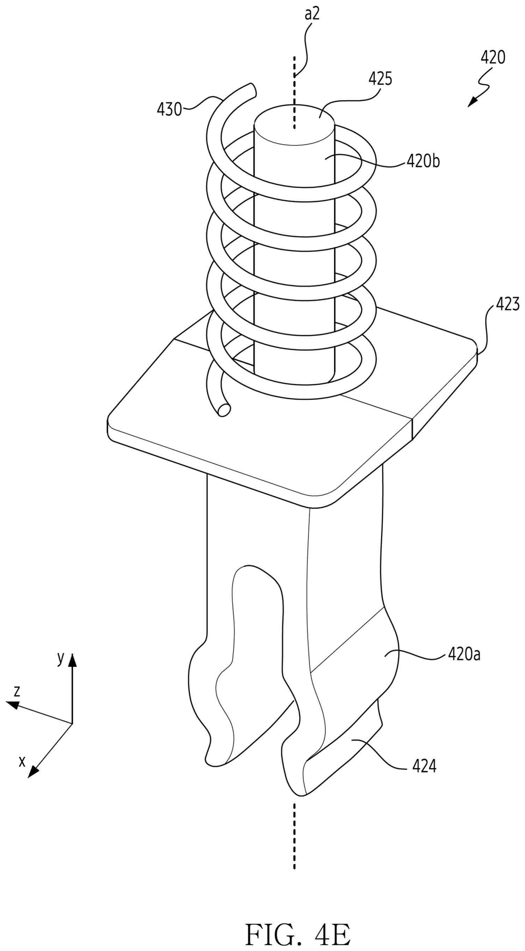

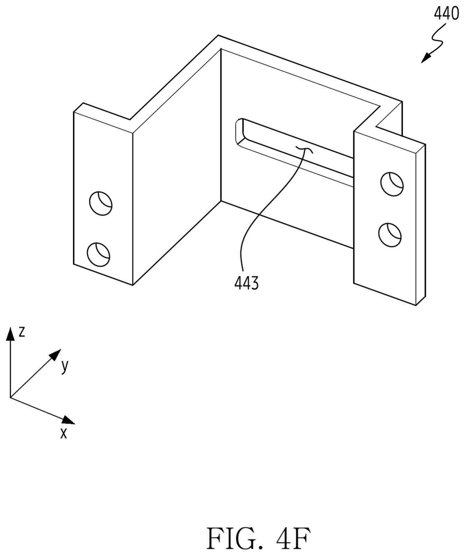

FIG. 4A is a top view of an exemplary support and second housing according to an embodiment, FIG. 4B is an exploded view of an exemplary support and second housing according to an embodiment, FIG. 4C is a perspective view illustrating an exemplary second housing according to an embodiment, FIG. 4D is a perspective view illustrating an exemplary support according to an embodiment, FIG. 4E is a perspective view illustrating an exemplary coupling member according to an embodiment, and FIG. 4F is a perspective view illustrating an exemplary bracket according to an embodiment.

Referring to FIGS. 4A, 4B, 4C, 4D, 4E, and 4F, according to an embodiment, an electronic device 101 may include a first housing 210, a second housing 220, a support 410 (e.g., the second pad 260 of FIGS. 2A and 2B), a plurality of coupling members 420, a plurality of deforming members 430, and/or a plurality of brackets 440.

According to an embodiment, the second housing 220 may support various components of the electronic device 101. For example, the second housing 220 may support the support 410, the plurality of coupling members 420, the plurality of deforming members 430, and/or the plurality of brackets 440. The second housing 220 may include a third case 221 and a fourth case 222. The third case 221 and the fourth case 222 may form (or define) an inner space of the second housing 220 in which at least a part of the plurality of coupling members 420, the plurality of deforming members 430, and/or the plurality of brackets 440 may be disposed, by being coupled to each other. According to an embodiment, the second housing 220 may be movable with respect to the first housing 210. For example, the second housing 220 may be movable in a direction (e.g., a -y direction) close to the first housing 210 and/or a direction (e.g., a +y direction) away from the first housing 210. According to an embodiment, the second housing 220 may have a shape corresponding to a part (e.g., the part b1 of the user's body of FIG. 2C) of a user's body. For example, the second housing 220 may have a shape of being curved with a curvature.

Referring to FIG. 4C, according to an embodiment, the second housing 220 may include a plurality of through-holes 221a and 221b. Each of the plurality of through-holes 221a and 221b may correspond to each of the plurality of coupling members 420. Each of the plurality of through-holes 221a and 221b may be penetrated by each of the plurality of coupling members 420. Each of the plurality of through-holes 221a and 221b may penetrate the second housing 220 so that a part of each of the plurality of coupling members 420 may be exposed to the outside of the second housing 220. For example, each of the plurality of through-holes 221a and 221b may penetrate the third case 221. The plurality of through-holes 221a and 221b may be spaced apart from each other. For example, a first through-hole 221a of the plurality of through-holes 221a and 221b may be spaced apart from a second through-hole 221b of the plurality of through-holes 221a and 221b.

According to an embodiment, when the electronic device 101 is worn by the user, the support 410 may be in contact with the part b1 of the user's body. The support 410 may support the part b1 (e.g., a head) of the user's body while the electronic device 101 is worn by the user. The support 410 supporting the part b1 of the body may indicate stably maintaining (or fixing) a position of the electronic device 101 with respect to the part b1 of the user's body while the electronic device 101 is worn by the user. For example, in order for the electronic device 101 to provide a realistic virtual environment to the user, a position of a plurality of lens supports (e.g., the plurality of lens supports 230 of FIG. 2B) with respect to the user needs to be stably maintained. The support 410 may stably maintain the position of the plurality of lens supports 230 with respect to the user by supporting the part b1 of the user's body while the electronic device 101 is worn by the user, and contribute to immersion of the user in a virtual environment provided by the electronic device 101. The support 410 may provide comfort to the user by supporting the part b1 of the user's body while the electronic device 101 is worn by the user. The support 410 may be in contact with the part b1 of the user's body while the electronic device 101 is worn by the user. For example, a part of the support 410 may be deformable when being in contact with the part b1 of the user's body. For example, another part of the support 410 may have rigidity so as to support the part of the support 410. According to an embodiment, the support 410 may have a shape corresponding to the part b1 of the user's body. For example, the support 410 may have a shape of being curved with a curvature.

According to an embodiment, the support 410 may be coupled to the second housing 220. For example, the support 410 may be coupled to be movable with respect to the second housing 220. For example, the support 410 may be rotatable (or tiltable or pivotable) with respect to the second housing 220 with respect to a first axis al. The first axis a1 (e.g., an x-axis) may extend in a direction perpendicular to a second axis a2 (e.g., a y-axis), which is a movement axis of the second housing 220 with respect to the first housing 210. For example, when the second axis a2 is referred to as a roll axis, the first axis a1 may be referred to as a pitch axis. For example, the support 410 may be pitched with respect to the second housing 220 with respect to the first axis a1. As the support 410 is rotatable with respect to the second housing 220 with respect to the first axis al, the support 410 may be inclined with respect to the second housing 220 to correspond to the part b1 of the user's body.

Referring to FIG. 4D, according to an embodiment, the support 410 may include a plurality of shafts 411. The plurality of shafts 411 may provide (or define or form) a rotation axis of the support 410 with respect to the second housing 220. For example, the plurality of shafts 411 may have a shape extending along the first axis a1. The plurality of shafts 411 may be positioned on a surface 410a of the support 410 facing the second housing 220. The plurality of shafts 411 may be exposed to the outside of the second housing 220 in a state in which the support 410 and the second housing 220 are coupled. The plurality of shafts 411 may be coupled to the support 410. The plurality of shafts 411 may be connected to the support 410. The plurality of shafts 411 may be integrally formed with the support 410, but are not limited thereto. For example, the plurality of shafts 411 may be formed separately from the support 410 and then fastened to the support 410 by a fastening member (e.g., a screw). According to an embodiment, the plurality of shafts 411 may include a first shaft 411a and a second shaft 411b. The second shaft 411b may be spaced apart from the first shaft 411a along the first axis a1. For example, the first shaft 411a and the second shaft 411b may be positioned on the first axis a1.

According to an embodiment, each of the plurality of coupling members 420 may couple the support 410 to the second housing 220. For example, each of the plurality of coupling members 420 may couple the support 410 to the second housing 220 so that the support 410 is movable with respect to the second housing 220. According to an embodiment, at least a part of each of the plurality of coupling members 420 may be accommodated (or disposed) in the second housing 220. For example, a part 420a of each of the plurality of coupling members 420 may be exposed to the outside of the second housing 220. The part 420a of each of the plurality of coupling members 420 may be coupled to each of the plurality of shafts 411 of the support 410 in the outside of the second housing 220. For example, the part 420a of each of the plurality of coupling members 420 may be engaged with each of the plurality of shafts 411 of the support 410 in the outside of the second housing 220. Another part 420b of each of the plurality of coupling members 420 may be accommodated (or disposed) inside the second housing 220. For example, the other part 420b of each of the plurality of coupling members 420 may be covered (or surrounded) by the second housing 220 by being disposed inside the second housing 220. For example, the other part 420b of each of the plurality of coupling members 420 may not be exposed to the outside of the second housing 220 by being accommodated inside the second housing 220.

According to an embodiment, each of the plurality of coupling members 420 may be spaced apart from each other along the first axis a1. For example, the plurality of coupling members 420 may include a first coupling member 421 and a second coupling member 422 spaced apart from each other along the first axis al. The first coupling member 421 may be coupled to the first shaft 411a. For example, the first coupling member 421 may be engaged with the first shaft 411a. For example, the first coupling member 421 may be in contact with the first shaft 411a. The second coupling member 422 may be coupled to the second shaft 411b. For example, the second coupling member 422 may be engaged with the second shaft 411b. For example, the second coupling member 422 may be in contact with the second shaft 411b. According to an embodiment, each of the plurality of coupling members 420 may have a shape opened toward the outside of the second housing 220. For example, the first coupling member 421 may have a shape opened toward the first shaft 411a. For example, the second coupling member 422 may have a shape opened toward the second shaft 411b.

According to an embodiment, each of the plurality of coupling members 420 may be movable with respect to the second housing 220. For example, each of the plurality of coupling members 420 may be linearly movable along the second axis a2 with respect to the second housing 220. For example, each of the plurality of coupling members 420 may be movable in a direction (e.g., a +y direction) toward the inside of the second housing 220 and/or a direction (e.g., a -y direction) toward the outside of the second housing 220.

Referring to FIG. 4E, according to an embodiment, each of the plurality of coupling members 420 may include at least one flange portion 423, at least one coupling portion 424, and at least one protruding portion 425.

According to an embodiment, the at least one flange portion 423 of each of the plurality of coupling members 420 may support each of the plurality of deforming members 430. For example, the at least one flange portion 423 of each of the plurality of coupling members 420 may be in contact with each of the plurality of deforming members 430. The at least one flange portion 423 may be disposed (or interposed) between the at least one coupling portion 424 and the at least one protruding portion 425. The at least one flange portion 423 may decrease (or suppress) separation of each of the plurality of coupling members 420 from the second housing 220. For example, a cross-sectional area of the at least one flange portion 423 may be larger than a cross-sectional area of each of the at least one coupling portion 424 and the at least one protruding portion 425. The at least one flange portion 423 of each of the plurality of coupling members 420 may have a cross-sectional area larger than a cross-sectional area of each of the plurality of through-holes 221a and 221b. The at least one flange portion 423 may decrease (or suppress) the separation of each of the plurality of coupling members 420 from the second housing 220 by having the cross-sectional area larger than the cross-sectional area of each of the plurality of through-holes 221a and 221b.

According to an embodiment, the at least one coupling portion 424 of each of the plurality of coupling members 420 may be in contact with the plurality of shafts 411 of the support 410. For example, the coupling portion 424 may be engaged with the plurality of shafts 411 of the support 410. The at least one coupling portion 424 of each of the plurality of coupling members 420 may have a shape opened toward the plurality of shafts 411. Since the at least one coupling portion 424 of each of the plurality of coupling members 420 has the opened shape, the plurality of shafts 411 and the at least one coupling portion 424 may be coupled when the electronic device 101 is manufactured.

According to an embodiment, the protruding portion 425 may protrude from the flange portion 423. For example, the protruding portion 425 may have a shape extending from the flange portion 423 toward the inside of the second housing 220 along the second axis a2. According to an embodiment, at least a part of the protruding portion 425 may be disposed in the plurality of deforming members 430. For example, at least a part of the protruding portion 425 may be covered (or surrounded) by each of the plurality of deforming members 430. For example, a part of the protruding portion 425 may be disposed in each of the plurality of deforming members 430, and another part of the protruding portion 425 may be disposed in each of the plurality of brackets 440, but is not limited thereto.

According to an embodiment, the part 420a of each of the plurality of coupling members 420 may include the coupling portion 424. The other part 420b of each of the plurality of coupling members 420 may include the flange portion 423 and/or the protruding portion 425.

According to an embodiment, each of the plurality of deforming members 430 may be disposed (or accommodated) in the second housing 220. Each of the plurality of deforming members 430 may be deformed by a movement of the support 410 with respect to the second housing 220. For example, the plurality of deforming members 430 may be an elastically deformable spring, but are not limited thereto. According to an embodiment, each of the plurality of deforming members 430 may be in contact with each of the plurality of coupling members 420. For example, the plurality of deforming members 430 may include a first deforming member 431 and a second deforming member 432. For example, each of the plurality of deforming members 430 may be referred to as an elastic member. For example, the first deforming member 431 may be referred to as a first elastic member, and the second deforming member 432 may be referred to as a second elastic member.

According to an embodiment, the first deforming member 431 may be in contact with the first coupling member 421. For example, the first deforming member 431 may be in contact with the at least one flange portion 423 of the first coupling member 421. As the support 410 moves with respect to the second housing 220, the first coupling member 421 may move with respect to the second housing 220 with the support 410. By the movement of the first coupling member 421 with respect to the second housing 220, the first deforming member 431 in contact with the first coupling member 421 may be deformed. For example, by the movement of the first coupling member 421 with respect to the second housing 220, the first deforming member 431 may be compressed and/or extended.

According to an embodiment, the second deforming member 432 may be in contact with the second coupling member 422. For example, the second deforming member 432 may be in contact with the at least one flange portion 423 of the second coupling member 422. As the support 410 moves with respect to the second housing 220, the second coupling member 422 may move with respect to the second housing 220 with the support 410. By the movement of the second coupling member 422 with respect to the second housing 220, the second deforming member 432 in contact with the second coupling member 422 may be deformed. For example, by the movement of the second coupling member 422 with respect to the second housing 220, the second deforming member 432 may be compressed and/or extended.

According to an embodiment, each of the plurality of brackets 440 may be disposed in the second housing 220. Each of the plurality of brackets 440 may support the plurality of coupling members 420 and the plurality of deforming members 430 in the second housing 220. Each of the plurality of brackets 440 may be fastened (or coupled or fixed) in the second housing 220. As each of the plurality of brackets 440 is fastened in the second housing 220, a position of each of the plurality of brackets 440 may be maintained while the support 410 and each of the plurality of coupling members 420 moves with respect to the second housing 220. For example, each of the plurality of brackets 440 may cover (or surround) each of the plurality of coupling members 420 and the plurality of deforming members 430 in the second housing 220. According to an embodiment, the plurality of brackets 440 may include a first bracket 441 and a second bracket 442. According to an embodiment, the first bracket 441 may accommodate the first coupling member 421 and the first deforming member 431. For example, the first bracket 441 may be covered (or surrounded) by the first coupling member 421 and the first deforming member 431. According to an embodiment, the second bracket 442 may accommodate the second coupling member 422 and the second deforming member 432. For example, the second bracket 442 may be covered (or surrounded) by the second coupling member 422 and the second deforming member 432.

Referring to FIG. 4F, according to an embodiment, each of the plurality of brackets 440 may include at least one opening 443. The at least one opening 443 of each of the plurality of brackets 440 may penetrate each of the plurality of brackets 440. The at least one opening 443 of each of the plurality of brackets 440 may accommodate the at least one protruding portion 425 of each of the plurality of coupling members 420. The at least one protruding portion 425 of each of the plurality of coupling members 420 may penetrate the at least one opening 443 of each of the plurality of brackets 440. For example, the at least one protruding portion 425 of each of the plurality of coupling members 420 may be movable with respect to the at least one opening 443 of each of the plurality of brackets 440 by a movement of each of the plurality of coupling members 420 with respect to the second housing 220.

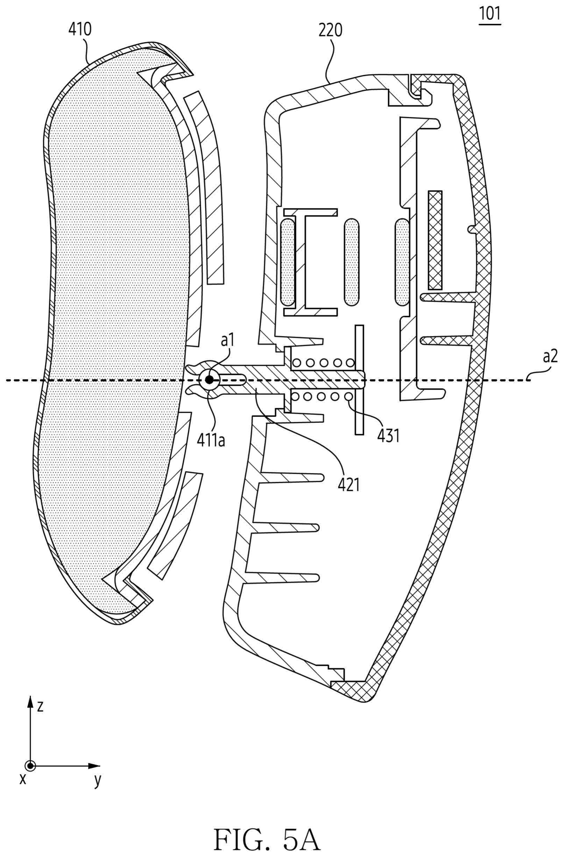

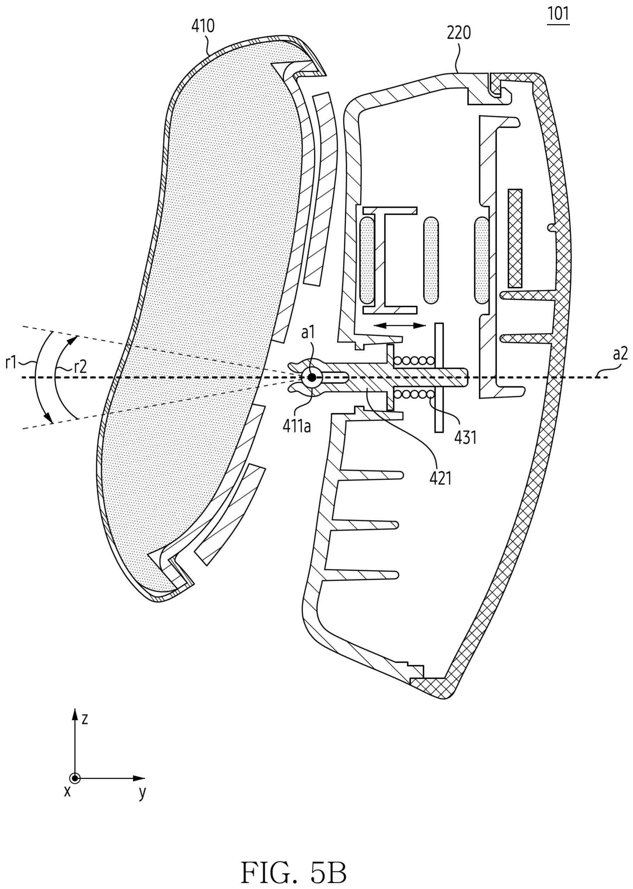

For example, since each of users has a different body shape or users moves in a state of wearing the electronic device 101, a position (or a posture) of the support 410 with respect to the second housing 220 may be changed. For example, the support 410 may rotate with respect to the second housing 220 with respect to the first axis a1. The rotation of the support 410 based on the first axis a1 may be described through FIGS. 5A and 5B.

FIG. 5A is a cross-sectional view illustrating an example in which an exemplary support and second housing according to an embodiment are cut along line A-A' of FIG. 4A and FIG. 5B is a cross-sectional view illustrating a state in which an exemplary support according to an embodiment is rotated with respect to a second housing.

FIGS. 5A and 5B describe a movement of a support 410 with respect to a second housing 220 with respect to a first shaft 411a, a first coupling member 421, a first deforming member 431, and a first bracket 441, but it is for convenience of description. For example, a description of FIGS. 5A and 5B may also be substantially equally applied to a relationship between a second shaft (e.g., the second shaft 411b of FIG. 4B), a second coupling member (e.g., the second coupling member 422 of FIG. 4B), a second deforming member (e.g., the second deforming member 432 of FIG. 4B), and a second bracket (e.g., the second bracket 442 of FIG. 4B) and the support 410.

Referring to FIGS. 5A and 5B, according to an embodiment, the support 410 may be rotatable (or pivotable) in a first rotation direction r1 and/or a second rotation direction r2 with respect to the second housing 220 with respect to a first axis a1. The second rotation direction r2 may be opposite to the first rotation direction r1. For example, the support 410 may rotate in the first rotation direction r1 with respect to the second housing 220 by an external force (e.g., an external force from a part (e.g., the part b1 of the body of FIG. 2C) of a user's body. When the support 410 rotates in the first rotation direction r1, the first shaft 411a coupled to the support 410 may rotate in the first rotation direction r1 with respect to the first coupling member 421 in a state of being engaged with the first coupling member 421. As the support 410 rotates with respect to the second housing 220 in the first rotation direction r1, a position (or a posture) of the support 410 with respect to the second housing 220 may be changed.

According to an embodiment, the support 410 may rotate in the second rotation direction r2 with respect to the second housing 220 by the external force (e.g., the external force from the part bl of the user's body). When the support 410 rotates in the second rotation direction r2, the first shaft 411a coupled to the support 410 may rotate in the second rotation direction r2 with respect to the first coupling member 421 in the state of being engaged with the first coupling member 421. As the support 410 rotates with respect to the second housing 220 in the second rotation direction r2, the position (or the posture) of the support 410 with respect to the second housing 220 may be changed.

According to an embodiment, the rotation of the support 410 with respect to the second housing 220 based on the first axis a1 may be independent of a movement of the first coupling member 421 with respect to the second housing 220 based on a second axis a2. For example, while the support 410 rotates with respect to the second housing 220 in the first rotation direction r1, the first coupling member 421 may not move with respect to the second housing 220. For example, while the support 410 rotates with respect to the second housing 220 in the first rotation direction r1, the first coupling member 421 may be movable toward the inside or the outside of the second housing 220 with respect to the second axis a2.

According to an embodiment, the support 410 may move in a direction (e.g., a +y direction) close to the second housing 220 by the external force (e.g., the external force from the part b1 of the user's body). For example, the support 410 may move linearly in the direction (e.g., the +y direction) close to the second housing 220 along the second axis a2 by the external force. By the movement of the support 410 in the direction (e.g., the +y direction) close to the second housing 220, the first coupling member 421 engaged with the support 410 may move toward the inside of the second housing 220. For example, the first coupling member 421 may move in the direction (e.g., the +y direction) close to the second housing 220 along the second axis a2 by the movement of the support 410 in the direction (e.g., the +y direction) close to the second housing 220. As the first coupling member 421 moves toward the inside of the second housing 220, the first deforming member 431 in contact with the first coupling member 421 may be compressed. As the first deforming member 431 is compressed, a distance between the support 410 and the second housing 220 may be decreased. As the first deforming member 431 is compressed, the position (or the posture) of the support 410 with respect to the second housing 220 may be changed.

According to an embodiment, the support 410 may move in a direction (e.g., a -y direction) away from the second housing 220 by the external force (e.g., the external force from the part b1 of the user's body). For example, the support 410 may move linearly in the direction (e.g., the -y direction) away from the second housing 220 along the second axis a2 by the external force. By the movement of the support 410 in the direction (e.g., the -y direction) away from the second housing 220, the first coupling member 421 engaged with the support 410 may move toward the outside of the second housing 220. For example, the first coupling member 421 may move in the direction (e.g., the -y direction) away from the second housing 220 along the second axis a2 by the movement of the support 410 in the direction (e.g., the -y direction) away from the second housing 220. As the first coupling member 421 moves toward the outside of the second housing 220, the first deforming member 431 in contact with the first coupling member 421 may be extended (or be restored). As the first deforming member 431 is compressed, the distance between the support 410 and the second housing 220 may be increased. As the first deforming member 431 is extended, the position (or the posture) of the support 410 with respect to the second housing 220 may be changed.

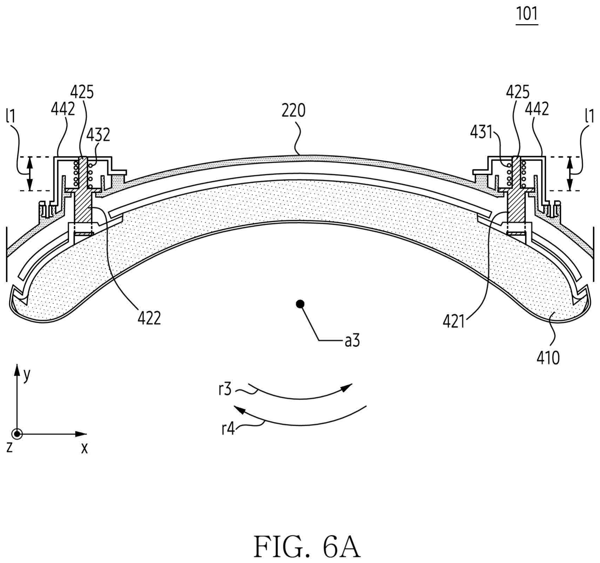

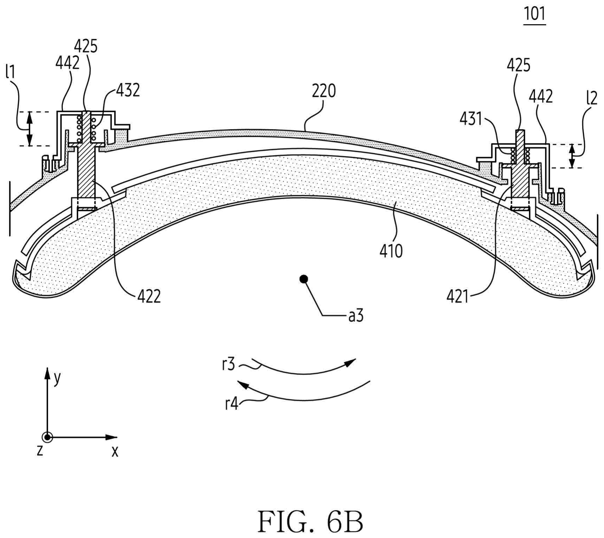

For example, the support 410 may be movable with respect to the second housing 220 with respect to another axis other than the first axis a1 and the second axis a2. A movement of the support 410 based on the other reference axis may be described through FIGS. 6A and 6B.

FIG. 6A is a cross-sectional view illustrating an example of cutting an exemplary support and second housing according to an embodiment and FIG. 6B is a cross-sectional view illustrating a state in which an exemplary support according to an embodiment is tilted with respect to a second housing.

Referring to FIGS. 6A and 6B, according to an embodiment, a first cover member 441 may at least partially cover a first coupling member 421. For example, the first cover member 441 may cover a protruding portion 425 of the first coupling member 421. A second cover member 442 may at least partially cover a second coupling member 422. For example, the second cover member 442 may cover the protruding portion 425 of the second coupling member 422.

According to an embodiment, a first deforming member 431 and a second deforming member 432 may be deformable independently of each other by a movement of a support 410 with respect to a second housing 220. For example, while the first deforming member 431 is deformed, the second deforming member 432 may not be deformed. For example, while the second deforming member 432 is deformed, the first deforming member 431 may not be deformed. For example, each of the first deforming member 431 and the second deforming member 432 may have a first length 11 before receiving an external force (or before being deformed).

According to an embodiment, the support 410 may be tilted (or rotated) with respect to the second housing 220 as one of the first deforming member 431 and the second deforming member 432 is deformed differently from another one of the first deforming member 431 and the second deforming member 432. For example, by a length difference between the first deforming member 431 and the second deforming member 432, the support 410 may be rotated with respect to the second housing 220 with respect to a first axis (e.g., the first axis a1 of FIGS. 4A and 4B), and a third axis a3 (e.g., a z-axis) perpendicular to a second axis (e.g., the second axis a2 of FIGS. 4A and 4B). The third axis a3 may be referred to as a yaw axis in a case that a first axis a1 is referred to as a pitch axis and a second axis a2 is referred to as a roll axis. For example, by the length difference between the first deforming member 431 and the second deforming member 432, the support 410 may be yawed with respect to the third axis a3.

According to an embodiment, a distance at which the second coupling member 422 moves toward the inside of the second housing 220 by a movement of the support 410 by an external force may be different from a distance at which the first coupling member 421 moves toward the inside of the second housing 220. For example, while the support 410 moves, a position of the first coupling member 421 may be maintained, and the second coupling member 422 may move toward the inside of the second housing 220. As only the second coupling member 422 moves to the inside of the second housing 220, a length of the first deforming member 431 may be maintained at the first length 11, and a length of the second deforming member 432 may be changed from the first length 11 to a second length 12 shorter than the first length 11. By the length difference between the first deforming member 431 and the second deforming member 432, the support 410 coupled to the first coupling member 421 and the second coupling member 422 may be tilted (or may rotate) with respect to the second housing 220. For example, in a case that the second deforming member 432 is relatively more deformed than the first deforming member 431 by the support 410, the support 410 may be rotated in a third rotation direction r3 with respect to the third axis a3.

According to an embodiment, in a state in which the length of the second deforming member 432 is the second length 12, the external force applied to the support 410 may be removed. As the external force applied to the support 410 is removed, the second deforming member 432 may press the second coupling member 422 in a direction (e.g., a -y direction) toward the outside of the second housing 220. The second coupling member 422 may move in the direction (e.g., the -y direction) toward the outside of the second housing 220 by the second deforming member 432. For example, while the second coupling member 422 moves in the direction (e.g., the -y direction) toward the outside of the second housing 220 by the second deforming member 432, a position of the first deforming member 431 and the first coupling member 421 with respect to the second housing 220 may be maintained. As the second coupling member 422 moves in the direction (e.g., the -y direction) toward the outside of the second housing 220 by the second deforming member 432, the support 410 may be rotated in a fourth rotation direction r4 opposite to the third rotation direction r3 with respect to the third axis a3. As the length of the second deforming member 432 is changed from the second length 12 to the first length 11, the rotation of the support 410 may be ceased.

Meanwhile, in FIG. 6B, a state in which a degree of deformation of the second deforming member 432 by an external force is greater than a degree of deformation of the first deforming member 431 by an external force is illustrated, but is not limited thereto. For example, in a case that the degree of deformation of the first deforming member 431 by the external force is greater than the degree of deformation of the second deforming member 432 by the external force, the support 410 may be rotated in the fourth rotation direction r4 with respect to the third axis a3.

As described above, the electronic device 101 according to an embodiment may provide a structure capable of stably supporting a user's body since the support 410 supporting the user is movable with respect to the first axis a1, the second axis a2, and the third axis a3. For example, since the support 410 is movable based on various axes a1, a2, and a3, an arrangement of the support 410 with respect to the second housing 220 may be changed to correspond to a user's body shape when the electronic device 101 is worn by the user. As the arrangement of the support 410 with respect to the second housing 220 is changed to correspond to the user's body shape, the user may feel comfortable.

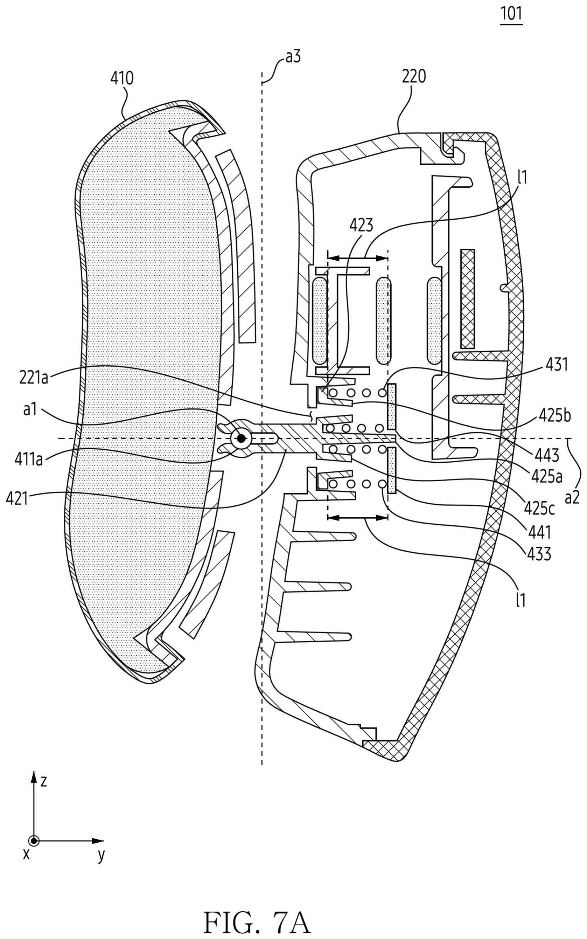

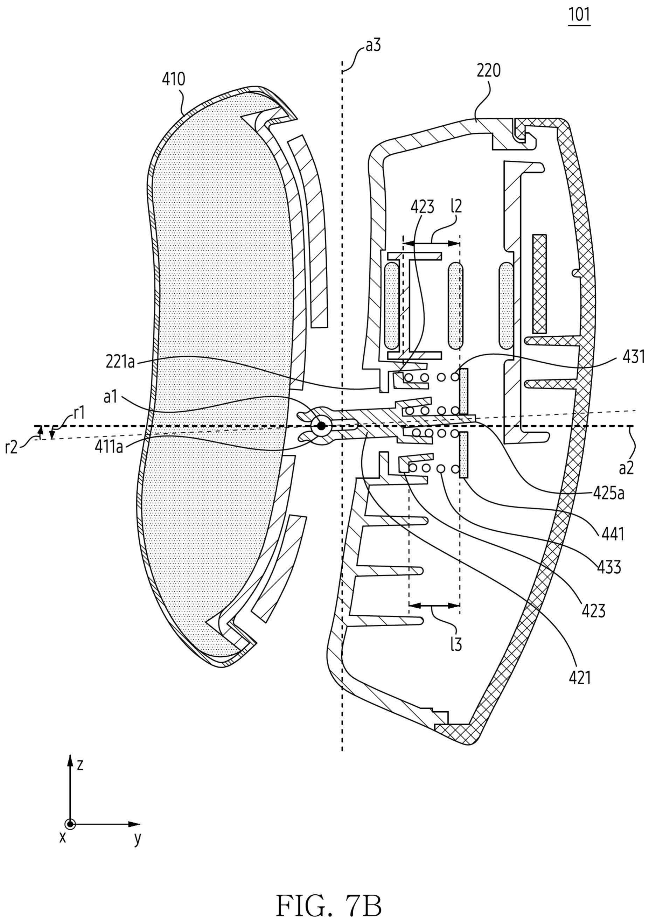

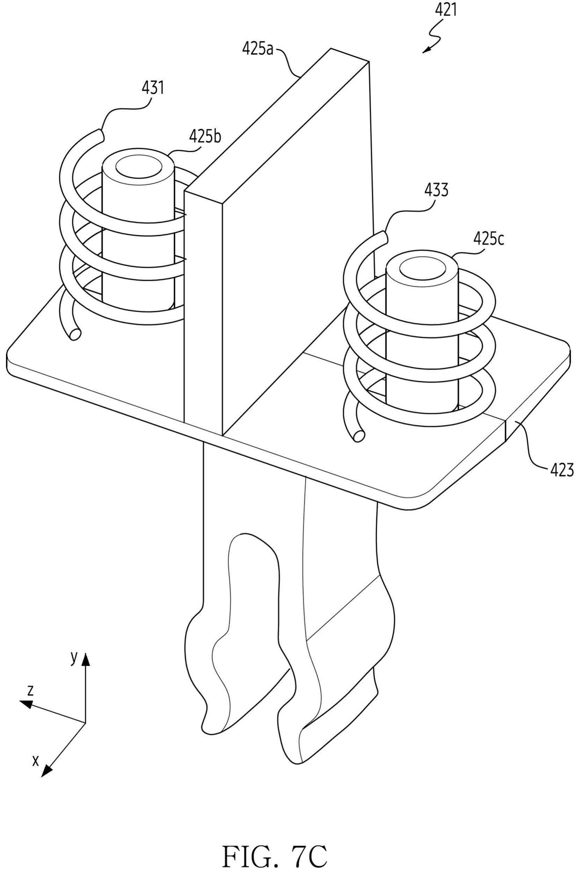

FIG. 7A is a cross-sectional view illustrating an example of cutting an exemplary support and second housing according to an embodiment, FIG. 7B is a cross-sectional view illustrating a state in which an exemplary support according to an embodiment is rotated with respect to a second housing, and FIG. 7C is a perspective view illustrating an exemplary coupling member according to an embodiment.

Since an electronic device 101 of FIGS. 7A, 7B, and 7C may be the electronic device 101 in which a shape of each of a plurality of coupling members 420 is changed in the electronic device 101 of FIGS. 4A to 4F, and a third deforming member 433 is added, a redundant description thereof will be omitted.

Meanwhile, in FIGS. 7A, 7B, and 7C, a movement of a support 410 with respect to a second housing 220 is described with respect to a first shaft 411a, a first coupling member 421, a first deforming member 431, and a first bracket 441, but it is for convenience of description. For example, a description of FIGS. 7A, 7B, and 7C may also be substantially equally applied to a relationship between a second shaft 411b, a second coupling member 422, a second deforming member 432, and a second bracket 442 and the support 410.

Referring to FIGS. 7A, 7B, and 7C, according to an embodiment, a plurality of deforming members 430 may further include the third deforming member 433. The third deforming member 433 may be referred to, for example, as a third elastic member. The third deforming member 433 may be disposed under the first deforming member 431. For example, the third deforming member 433 may be spaced apart from the first deforming member 431 along the third axis a3 (e.g., a z-axis). The third deforming member 433 may be arranged from the first deforming member 431 along the third axis a3 (e.g., the z-axis). The third deforming member 433 may be in contact with the first coupling member 421. For example, the third deforming member 433 may be in contact with at least one flange portion 423 of the first coupling member 421. For example, an end of the third deforming member 433 may be in contact with the at least one flange portion 423, and another end of the third deforming member 433, which is opposite to the end of the third deforming member 433, may be in contact with the first bracket 441. By contacting the first coupling member 421, the third deforming member 433 may be deformed by the movement of the support 410 with respect to the second housing 220. According to an embodiment, the first deforming member 431 and the third deforming member 433 may be deformable independently of each other by the movement of the support 410 with respect to the second housing 220. For example, a length of each of the first deforming member 431 and the third deforming member 433 may be a first length 11 before receiving an external force (or before being deformed).

For example, by a movement of the support 410 by an external force, the length of the first deforming member 431 may be changed from the first length 11 to a second length 12 shorter than the first length 11, and the length of the third deforming member 433 may be changed from the first length 11 to a third length 13 shorter than the second length l2. As the first deforming member 431 and the third deforming member 433 are compressed by the external force, the first coupling member 421 may be moved in a direction (e.g., a +y direction) toward the inside of the second housing 220 along a second axis a2. As the first coupling member 421 is moved in the direction (e.g., the +y direction) toward the inside of the second housing 220, the support 410 coupled to the first coupling member 421 may move in the direction (e.g., the +y direction) toward the inside of the second housing 220.

According to an embodiment, at least one protruding portion 425 may include a first protruding portion 425a, a second protruding portion 425b, and/or a third protruding portion 425c.

According to an embodiment, the first protruding portion 425a may have a shape extending from the at least one flange portion 423 in the direction (e.g., the +y direction) toward the inside of the second housing 220. For example, a cross-sectional area of the first protruding portion 425a may be smaller than a cross-sectional area of the at least one flange portion 423. A part of the first protruding portion 425a may be inserted into at least one opening 443 of the first bracket 441. The first protruding portion 425a may be disposed between the first deforming member 431 and the third deforming member 433.

According to an embodiment, the second protruding portion 425b may have a shape extending from the at least one flange portion 423 in the direction (e.g., the +y direction) toward the inside of the second housing 220. For example, a cross-sectional area of the second protruding portion 425b may be smaller than a cross-sectional area of the at least one flange portion 423. A length of the second protruding portion 425b may be shorter than a length of the first protruding portion 425a. A length of a component may indicate a distance to a first axis a1, and the corresponding expression may be used substantially the same below unless otherwise stated. The second protruding portion 425b may be disposed in the first deforming member 431. For example, the second protruding portion 425b may be surrounded (or covered) by the first deforming member 431.

According to an embodiment, the third protruding portion 425c may have a shape extending from the at least one flange portion 423 in the direction (e.g., the +y direction) toward the inside of the second housing 220. For example, a cross-sectional area of the third protruding portion 425c may be smaller than a cross-sectional area of the at least one flange portion 423. A length of the third protruding portion 425c may be shorter than a length of the first protruding portion 425a. The third protruding portion 425c may be disposed in the third deforming member 433. For example, the third protruding portion 425c may be surrounded (or covered) by the third deforming member 433. The third protruding portion 425c may be spaced apart from the second protruding portion 425b along the third axis a3. For example, the first protruding portion 425a may be disposed between the second protruding portion 425b and the third protruding portion 425c.

According to an embodiment, the support 410 may be rotated (or tilted) with respect to the second housing 220 as one of the first deforming member 431 and the third deforming member 433 is deformed differently from another one of the first deforming member 431 and the third deforming member 433. For example, by a length difference between the first deforming member 431 and the third deforming member 433, the support 410 may be rotated with respect to the second housing 220 with respect to the first axis a1. For example, by the movement of the support 410 by the external force, the length of the first deforming member 431 may be changed from the first length 11 to the second length 12 shorter than the first length 11, and the length of the third deforming member 433 may be changed from the first length 11 to the third length 13 shorter than the second length 12. As the first deforming member 431 and the third deforming member 433 are compressed by the external force, the first coupling member 421 may be moved in the direction (e.g., the +y direction) toward the inside of the second housing 220 along the second axis a2. As the length of the first deforming member 431 and the length of the third deforming member 433 are different by the external force, the first coupling member 421 may be rotated with respect to the second housing 220 with respect to the first axis a1. By the rotation of the first coupling member 421, the support 410 coupled to the first coupling member 421 may be rotated with respect to the second housing 220 with respect to the first axis a1. For example, since the third length 13 of the third deforming member 433 is shorter than the second length 12 of the first deforming member 431, the first coupling member 421 and the support 410 may be rotated in a first rotation direction r1. However, it is not limited thereto. For example, in a case that the length of the third deforming member 433 is longer than the length of the first deforming member 431 by the external force, the first coupling member 421 and the support 410 may be rotated in a second rotation direction r2 with respect to the second housing 220.

According to an embodiment, the first protruding portion 425a may limit the rotation of the first coupling member 421 by the length difference between the first deforming member 431 and the third deforming member 433. The first protruding portion 425a may be inserted into the at least one opening 443 while the support 410 rotates with respect to the first axis a1 by the length difference between the first deforming member 431 and the third deforming member 433. For example, in a case that the first coupling member 421 rotates beyond a designated angle by the length difference between the first deforming member 431 and the third deforming member 433, the first protruding portion 425a may be in contact with the first bracket 441. The rotation of the first coupling member 421 may be ceased by the contact with the first bracket 441.

According to an embodiment, a cross-sectional area of the at least one flange portion 423 may be larger than a size of a cross-sectional area of a first through-hole 221a. Since the cross-sectional area of the at least one flange portion 423 is larger than the size of the cross-sectional area of the first through-hole 221a, the at least one flange portion 423 may limit a movement of the first coupling member 421 toward the outside of the second housing 220 along the second axis a2.

As described above, by the length difference between the first deforming member 431 and the third deforming member 433 arranged along the third axis a3, the electronic device 101 according to an embodiment may provide a structure in which the first coupling member 421 may be rotated with respect to the first axis a1. Since the first coupling member 421 is rotatable with respect to the first axis a1, the electronic device 101 may provide a structure capable of finely adjusting a position of the support 410 with respect to the second housing 220.

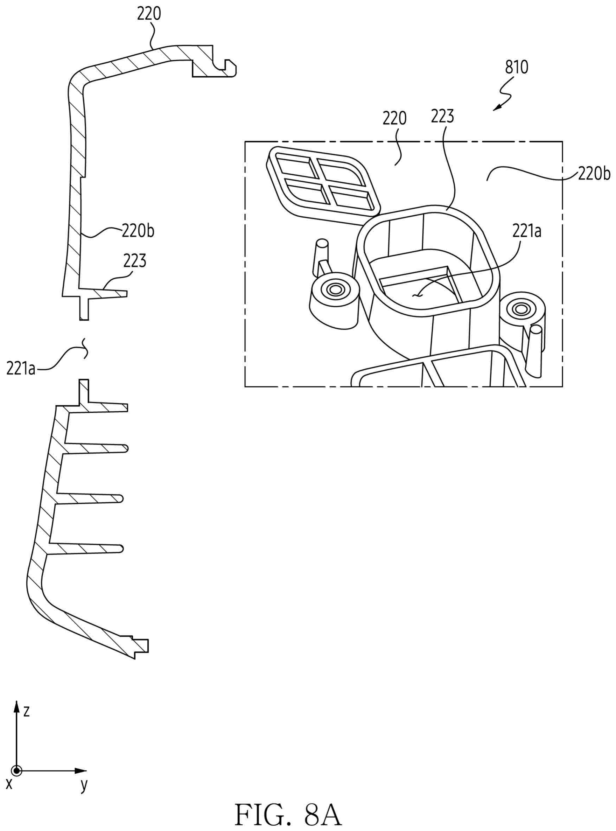

FIGS. 8A to 8D indicate an example of a method to which an exemplary coupling member and second housing according to an embodiment are coupled.

A description of FIGS. 8A to 8D describes a coupling of a second housing 220, a first coupling member 421, a first deforming member 431, a third deforming member 433, and a first bracket 441 with respect to the first coupling member 421, the first deforming member 431, the third deforming member 433, and the first bracket 441, but it is for convenience of description. For example, the description of FIGS. 8A to 8D may also be substantially equally applied to a relationship between the second housing 220, a second coupling member 422, a second deforming member 432, and a second bracket 442 and a support 410.

Referring to FIG. 8A, in a state 810, a first through-hole 221a may be formed in the second housing 220. For example, the first through-hole 221a may be formed as the second housing 220 is penetrated. According to an embodiment, the second housing 220 may include a seating portion 223. The seating portion 223 may protrude from an inner surface 220b of the second housing 220. For example, the seating portion 223 may extend (or protrude) from the inner surface 220b of the second housing 220 in a direction (e.g., a +y direction) in which the inner surface 220b of the second housing 220 faces.

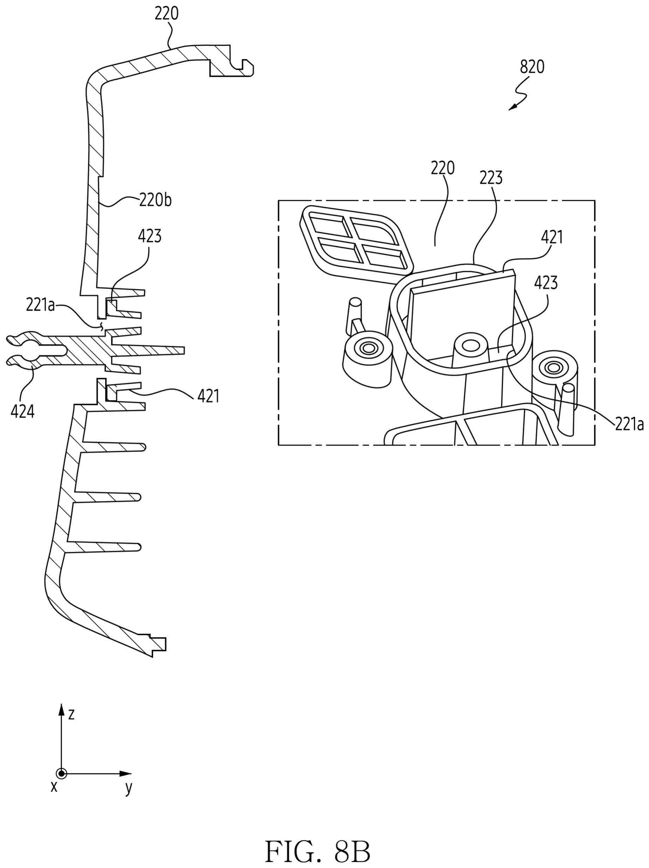

Referring to FIG. 8B, in a state 820, the first coupling member 421 may be inserted into the first through-hole 221a. For example, since a size of the first through-hole 221a is smaller than a size of at least one flange portion 423, the first coupling member 421 may penetrate the first through-hole 221a by being moved from the inside of the second housing 220 in a direction toward the outside of the second housing 220. In a state in which the first coupling member 421 is inserted into the first through-hole 221a, at least one coupling portion 424 may be exposed to the outside of the second housing 220. The first coupling member 421 may be disposed on the seating portion 223. The first coupling member 421 may be accommodated (or disposed) in the seating portion 223.

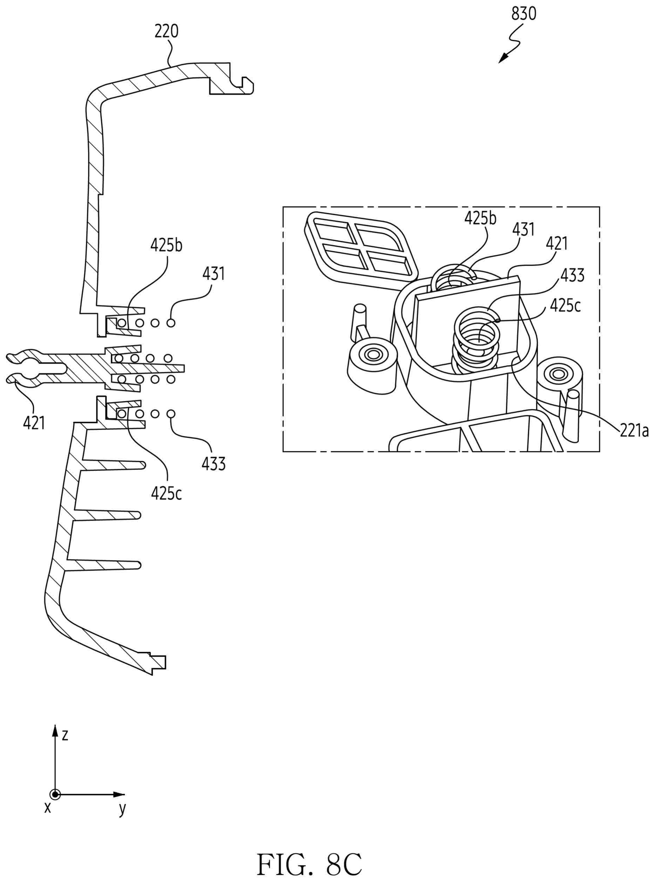

Referring to FIG. 8C, in a state 830, the first deforming member 431 and the third deforming member 433 may be coupled to the first coupling member 421. For example, the first deforming member 431 may be coupled to a second protruding portion 425b. For example, the third deforming member 433 may be coupled to a third protruding portion 425c.

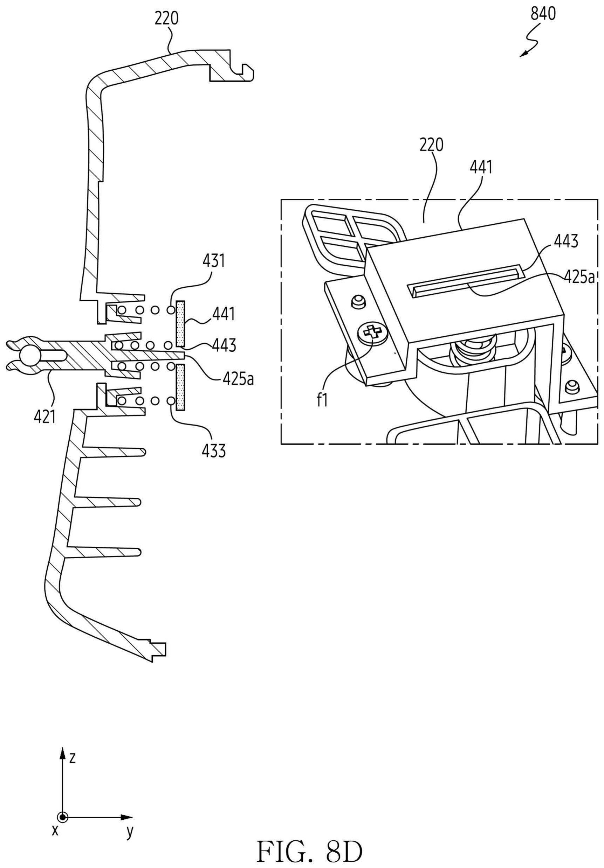

Referring to FIG. 8D, in a state 840, the first bracket 441 may be disposed on the second housing 220 to surround the first coupling member 421, the first deforming member 431, and the third deforming member 433. For example, after at least one opening 443 of the first bracket 441 and a first protruding portion 425a are aligned, the first protruding portion 425a may be inserted into the at least one opening 443. After the first protruding portion 425a is inserted into the at least one opening 443, the first bracket 441 may be fastened to the second housing 220. For example, the first bracket 441 may be fixed to the second housing 220 by a fastening member f1 penetrating the first bracket 441 and the second housing 220.

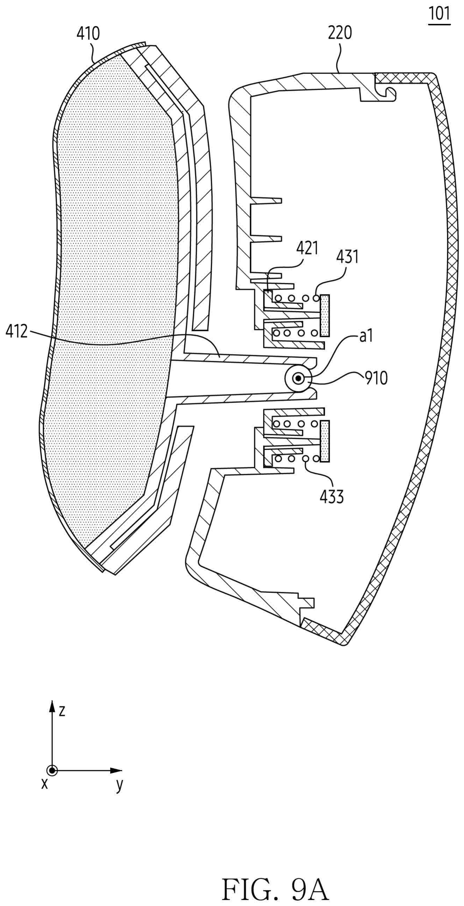

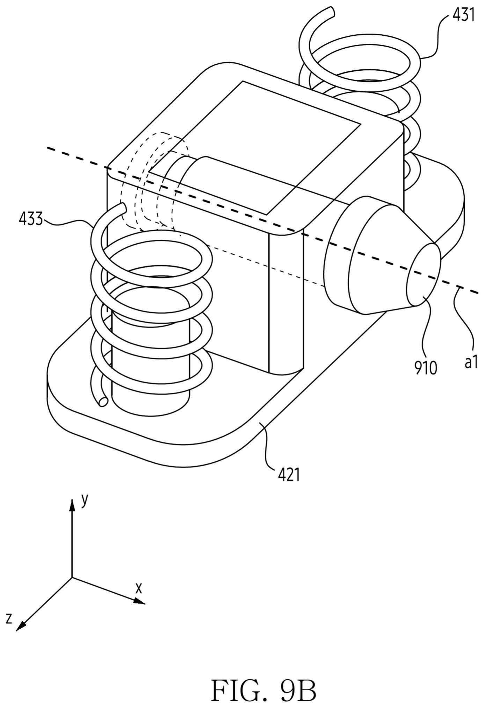

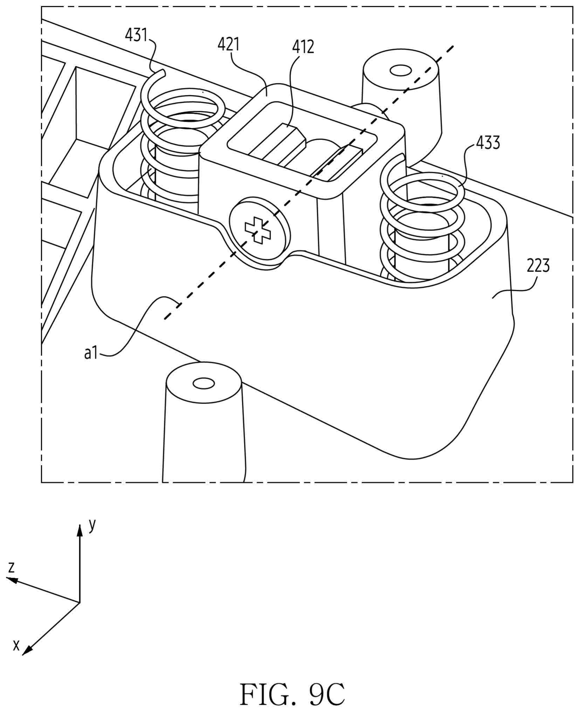

FIG. 9A is a cross-sectional view illustrating an example of cutting an exemplary support and second housing according to an embodiment, FIG. 9B is a perspective view illustrating an exemplary coupling member according to an embodiment, and FIG. 9C is a perspective view illustrating an example to which an exemplary coupling member, housing, and support according to an embodiment are coupled.

Since an electronic device 101 of FIGS. 9A, 9B, and 9C may be the electronic device 101 in which a structure of the support 410 and a structure of the first coupling member 421 are changed in the electronic device 101 of FIGS. 7A, 7B, and 7C, a redundant description thereof will be omitted.

Referring to FIGS. 9A, 9B, and 9C, according to an embodiment, a first coupling member 421 may be disposed in a second housing 220. For example, the first coupling member 421 may not protrude outside the second housing 220.

According to an embodiment, the electronic device 101 may further include a pin 910. The pin 910 may provide a rotation axis of a support 410 with respect to the second housing 220. The pin 910 may penetrate the first coupling member 421. The pin 910 may have a shape extending along a first axis a1 (e.g., an x-axis). The pin 910 may be disposed (or accommodated) inside the second housing 220.

According to an embodiment, the support 410 may include an extending portion 412. The extending portion 412 may have a shape extending in a direction (e.g., a +y direction) away from the support 410. For example, the extending portion 412 may be integrally formed with the support 410, but is not limited thereto. For example, the extending portion 412 may be formed separately from the support 410 and then coupled to the support 410. A part of the extending portion 412 may be inserted into the second housing 220. The part of the extending portion 412 inserted into the second housing 220 may be coupled to the pin 910. For example, the extending portion 412 may be engaged with the pin 910. As the extending portion 412 connected to the support 410 is coupled to the pin 910, the support 410 may be rotatable (or pivotable) with respect to the second housing 220 with respect to the pin 910. For example, the support 410 may be rotatable (or pivotable) with respect to the second housing 220 with respect to the first axis a1 provided by the pin 910. According to an embodiment, by a length difference between a first deforming member 431 and a third deforming member 433, the support 410 may be rotatable (or pivotable) with respect to the first axis a1.

According to an embodiment, the first coupling member 421 may be disposed on a seating portion 223 of the second housing 220. A part of the extending portion 412 may pass through the seating portion 223. For example, the part of the extending portion 412 may be disposed (or positioned) inside the second housing 220 by penetrating the seating portion 223. A part of the first deforming member 431 and the third deforming member 433 may be covered (or surrounded) by the seating portion 223.

As described above, the electronic device 101 according to an embodiment may provide a structure capable of stably supporting a part (e.g., the part b1 of the body of FIG. 2C) of a user's body when the electronic device 101 is worn by the user since the support 410 is movable with respect to the second housing 220.

An electronic device may include a support for supporting the part (e.g., an occipital region) of the user's body. Since the user may move in a state of wearing the electronic device, the user may feel uncomfortable in a case that an arrangement of the support with respect to a housing is not changed. In order to change the arrangement of the support with respect to the housing, the electronic device may need a structure in which the support is movable.

An electronic device (e.g., the electronic device 101 of FIG. 4B) is provided. According to an embodiment, the electronic device may include a housing (e.g., the second housing 220 of FIG. 4B). According to an embodiment, the electronic device may include a support (e.g., the support 410 of FIG. 4B) exposed to the outside of the housing and supporting a part of a user's body while the electronic device is worn by the user. According to an embodiment, the electronic device may include a plurality of coupling members (e.g., the plurality of coupling members 420 of FIG. 4B) spaced apart from each other along a first axis (e.g., the first axis a1 of FIG. 4B), coupling the support to the housing, and movable toward the inside or the outside of the housing, the plurality of coupling members at least partially accommodated in the housing. According to an embodiment, the electronic device may include a plurality of deforming members (e.g., the plurality of deforming members 430 of FIG. 4B) deformable by a movement of the support with respect to the housing by contacting each of the plurality of coupling members in the housing. According to an embodiment, the support may be configured to rotate with respect to the housing with respect to the first axis, or tilt with respect to the housing, as a first deforming member of the plurality of deforming members is compressed differently from a second deforming member of the plurality of deforming members by the movement of the support.

The electronic device according to an embodiment may provide a structure capable of stably supporting the part of the user's body wearing the electronic device by the support movable to be inclined or rotated with respect to the second housing. The electronic device according to an embodiment may provide a structure capable of saving a space of the electronic device since at least a part of the coupling member for moving the support exposed to the outside of the housing is disposed inside the housing.

According to an embodiment, the support may include a shaft (e.g., the plurality of shafts 411 of FIG. 4D) extending along the first axis. According to an embodiment, each of the plurality of coupling members may include a coupling portion (e.g., the coupling portion 424 of FIG. 4B) engaged with a pivot. According to an embodiment, each of the plurality of coupling members may include a flange portion (e.g., the flange portion 423 of FIG. 4B) in contact with each of the deforming members within the housing.

The electronic device according to an embodiment may provide a structure capable of stably supporting the part of the user's body wearing the electronic device by the support pivotable with respect to the first axis.

According to an embodiment, a part of each of the plurality of coupling members may be exposed to the outside of the housing and have a shape opened toward the pivot.

The electronic device according to an embodiment may provide a structure to which the pivot and each of the plurality of coupling members are easily coupled since the part of each of the plurality of coupling members have the shape opened toward the pivot.

According to an embodiment, the electronic device may include a plurality of brackets (e.g., the plurality of brackets 440 of FIG. 4B) fastened to the housing and partially covering each of the plurality of coupling members.

The electronic device according to an embodiment may provide a structure capable of stably supporting each of the plurality of coupling members by the plurality of brackets fastened in the housing.

According to an embodiment, each of the plurality of brackets may include an opening (e.g., the at least one opening 443 of FIG. 4F) corresponding to each of the plurality of coupling members and penetrating each of the plurality of brackets. According to an embodiment, each of the plurality of coupling members may penetrate the opening.

The electronic device according to an embodiment may provide a structure in which each of the plurality of coupling members is stably disposed since each of the plurality of coupling members is disposed in the opening penetrating each of the plurality of brackets.

According to an embodiment, each of the plurality of coupling members may be movable in a direction toward the inside of the housing or a direction toward the outside of the housing, with respect to a second axis (e.g., the second axis a2 of FIG. 4B) perpendicular to the first axis. According to an embodiment, the plurality of deforming members may include the first deforming member (e.g., the first deforming member 431 of FIG. 7B) in contact with a part of a first coupling member of the plurality of coupling members. According to an embodiment, the plurality of deforming members may include the second deforming member (e.g., the third deforming member 433 of FIG. 7B) spaced apart from the first deforming member in a third axis perpendicular to the first axis and the second axis and in contact with the part of the first coupling member. According to an embodiment, the support may be tiltable with respect to the housing as the second deforming member is compressed differently from the first deforming member by the movement of the support.

The electronic device according to an embodiment may provide a structure capable of finely adjusting a position of the support with respect to the housing since the support is rotatable with respect to the first axis by a length difference between the deforming members. It may provide a structure capable of stably supporting the part of the user's body wearing the electronic device.

According to an embodiment, the plurality of deforming members may include a third deforming member (e.g., the second deforming member 432 of FIG. 4B) in contact with a second coupling member spaced apart from the first coupling member among the plurality of coupling members in the first axis. According to an embodiment, the support may be configured to rotate with respect to the third axis with respect to the housing as the first deforming member is compressed differently from the third deforming member by the movement of the support.

The electronic device according to an embodiment may provide a structure capable of stably supporting the part of the user's body wearing the electronic device by the support that may be pitched with respect to the first axis.

According to an embodiment, at least a part of the support may be deformable to support the part of the user's body.

The electronic device according to an embodiment may provide a structure capable of stably supporting the part of the user's body wearing the electronic device since the support is deformable.

According to an embodiment, the electronic device may include a pin penetrating each of the plurality of coupling members and having a shape extending along the first axis. According to an embodiment, the support may include an extending portion (e.g., the extending portion 412 of FIGS. 9A and 9B), a part of the extending portion coupled to the pin by extending into the housing.

The electronic device according to an embodiment may provide a structure capable of stably supporting the part of the user's body wearing the electronic device by the extending portion of the support rotatably coupled to the pin disposed in the housing.

According to an embodiment, the part of the extending portion may have a shape opened toward the inside of the housing.

The electronic device according to an embodiment may provide a structure to which the extending portion and the pin is easily coupled since the part of the extending portion is opened.

According to an embodiment, the housing may be movable to close to or away from the part of the user's body along the second axis perpendicular to the first axis.

In the electronic device according to an embodiment, since the second housing is movable with respect to a first housing, a position of the second housing with respect to the first housing may be changed to correspond to the user's body.

According to an embodiment, each of the plurality of coupling members may include a protruding portion (e.g., the protruding portion 425 of FIG. 4E) inserted into each of the plurality of deforming members.

The electronic device according to an embodiment may provide a structure capable of decreasing the deforming member from being separated from the coupling member by the protruding portion supporting each of the plurality of coupling members.

According to an embodiment, the electronic device may include a plurality of brackets (e.g., the plurality of brackets 440 of FIG. 4B) fastened to the housing and covering each of the plurality of coupling members, and each of the plurality of brackets including an opening. According to an embodiment, the protruding portion may be movable with respect to the opening by the movement of the support with respect to the housing.

According to an embodiment, the housing may include a through-hole (e.g., the first through-hole 221a of FIG. 4C) into which a first coupling member of the plurality of coupling members is inserted. According to an embodiment, the first coupling member may include a flange portion (e.g., the at least one flange portion 423 of FIG. 4E) having a cross-sectional area larger than a cross-sectional area of the through-hole.

According to an embodiment, the housing and the support may be curved to have a curvature so as to have a shape corresponding to the part of the user's body.

A wearable device (e.g., the electronic device 101 of FIG. 4B) is provided. According to an embodiment, the wearable device may include a housing (e.g., the second housing 220 of FIG. 4B). According to an embodiment, the wearable device may include a support (e.g., the support 410 of FIG. 4B) exposed to the outside of the housing and supporting a part of a user's body while the wearable device is worn by the user. According to an embodiment, the wearable device may include a plurality of coupling members (e.g., the plurality of coupling members 420 of FIG. 4B) spaced apart from each other along a first axis (e.g., the first axis a1 of FIG. 4B), coupling the support to the housing, and movable linearly with respect to the housing with respect to a second axis (e.g., the second axis a2 of FIG. 4B) perpendicular to the first axis, and at least a part of the plurality of coupling members is accommodated in the housing. According to an embodiment, the wearable device may include a plurality of deforming members (e.g., the plurality of deforming members 430 of FIG. 4B) deformable by a movement of the support with respect to the housing by contacting each of the plurality of coupling members in the housing. According to an embodiment, the support may be configured to rotate with respect to the housing with respect to the first axis, or yaw with respect to the housing with respect to the second axis, as one deforming member of the plurality of deforming members is compressed differently from another deforming member of the plurality of deforming members by the movement of the support.

The wearable device according to an embodiment may provide a structure capable of stably supporting the part of the user's body wearing the wearable device by the support that is movable to be inclined or rotated with respect to the second housing. The wearable device according to an embodiment may provide a structure capable of saving a space of the wearable device since at least a part of the coupling member for moving the support exposed to the outside of the housing is disposed inside the housing.

According to an embodiment, the support may include a shaft (e.g., the plurality of shafts 411 of FIG. 4D) extending along the first axis. According to an embodiment, a part (e.g., the part 420a of FIG. 4B) of each of the plurality of coupling members may be engaged with a pivot. According to an embodiment, another part (e.g., the other part 420b of FIG. 4B) of each of the plurality of coupling members may be in contact with each of the deforming members within the housing.

The wearable device according to an embodiment may provide a structure capable of stably supporting the part of the user's body wearing the wearable device by the support pivotable with respect to the first axis.

According to an embodiment, the wearable device may include a plurality of brackets (e.g., the plurality of brackets 440 of FIG. 4B) fastened to the housing and covering each of the plurality of coupling members.

The wearable device according to an embodiment may provide a structure capable of stably supporting each of the plurality of coupling members by the plurality of brackets fastened in the housing.

According to an embodiment, the plurality of deforming members may include a third deforming member (e.g., the second deforming member 432 of FIG. 4B) in contact with a second coupling member spaced apart from the first coupling member among the plurality of coupling members along the first axis. According to an embodiment, the support may be configured to rotate with respect to the housing with respect to the third axis as the first deforming member is compressed differently from the third deforming member by the movement of the support.

The wearable device according to an embodiment may provide a structure capable of stably supporting the part of the user's body wearing the wearable device by the support that may be pitched with respect to the first axis.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (220);
a support (410) disposed to the outside of the housing (220) and supporting a part (b1) of a user's body while the electronic device (101) is worn by the user;
a plurality of coupling members (420) spaced apart from each other along a first axis (a1), coupling the support (410) to the housing (220), and movable toward the inside or the outside of the housing (220), the plurality of coupling members (420) at least partially accommodated in the housing (220); and
a plurality of deforming members (430) deformable by a movement of the support (410) with respect to the housing (220) by contacting each of the plurality of coupling members (420) in the housing (220),
wherein the support (410) is configured to:
pivot with respect to the housing (220) with respect to the first axis (a1), or
tilt with respect to the housing (220), as a first deforming member (431) of the plurality of deforming members (430) is deformed differently from a second deforming member (432) of the plurality of deforming members (430) by the movement of the support (410).

2. The electronic device (101) of claim 1,
wherein the support (410) includes a shaft (411a, 411b) extending along the first axis (a1),
wherein each of the plurality of coupling members (420) includes:
a coupling portion (424) engaged with the shaft (411a, 411b), and
a flange portion (423) in contact with each of the plurality of deforming members (430) within the housing (220).

3. The electronic device (101) of claim 2,
wherein the coupling portion (424) is exposed to the outside of the housing (220) and has a shape opened toward the shaft (411a, 411b).

4. The electronic device (101) of any one of claims 1 to 3, further comprising a plurality of brackets (440) fastened to the housing (220) and partially covering each of the plurality of coupling members (420).

5. The electronic device (101) of claim 4,
wherein each of the plurality of brackets (440) includes an opening (443) corresponding to each of the plurality of coupling members (420) and penetrating each of the plurality of brackets (440), and
wherein each of the plurality of coupling members (420) penetrates the opening (443).

6. The electronic device (101) of any one of claims 1 to 5,
wherein each of the plurality of coupling members (420) is movable in a direction toward the inside of the housing (220) or a direction toward the outside of the housing (220), with respect to a second axis (a2) perpendicular to the first axis (a1),
wherein the first deforming member (431) is in contact with a part of a first coupling member (421) of the plurality of coupling members (420),
wherein the plurality of deforming members (430) further includes:
a second coupling member (422) (433) spaced apart from the first deforming member (431) in a third axis (a3) perpendicular to the first axis (a1) and the second axis (a2) and in contact with the part of the first coupling member (421); and
wherein the support (410) is tiltable with respect to the housing (220) as the second coupling member (422) (433) is deformed differently from the first deforming member (431) by the movement of the support (410).

7. The electronic device (101) of claim 6,
wherein the second deforming member (432) is in contact with a second coupling member spaced apart from the first coupling member (421) among the plurality of coupling members (420) in the first axis (a1), and
wherein the support (410) is configured to rotate with respect to the third axis (a3) with respect to the housing (220) as the first deforming member (431) is compressed differently from the second deforming member (432) by the movement of the support (410).

8. The electronic device (101) of any one of claims 1 to 7,
wherein at least a part of the support (410) is deformable to support (410) the part of the user's body.

9. The electronic device (101) of any one of claims 1 to 8, further comprising a pin (910) penetrating each of the plurality of coupling members (420) and having a shape extending along the first axis (a1), and
wherein the support (410) includes an extending portion, a part of the extending portion coupled to the pin (910) by extending into the housing (220).

10. The electronic device (101) of claim 9,
wherein the part of the extending portion has a shape opened toward the inside of the housing (220).

11. The electronic device (101) of any one of claims 1 to 10,
wherein the housing (220) is movable to close to or away from the part of the user's body along the second axis (a2) perpendicular to the first axis (a1).

12. The electronic device (101) of any one of claims 1 to 11,
wherein each of the plurality of coupling members (420) includes a protruding portion (425) inserted into each of the plurality of deforming members (430).

13. The electronic device (101) of claim 12, further comprising a plurality of brackets (440) fastened to the housing (220) and covering each of the plurality of coupling members (420), and each of the plurality of brackets (440) including an opening (443), and
wherein the protruding portion is movable with respect to the opening (443) by the movement of the support (410) with respect to the housing (220).

14. The electronic device (101) of any one of claims 1 to 13,
wherein the housing (220) includes a through-hole (211a) into which a first coupling member (421) of the plurality of coupling members (420) is inserted, and
wherein the first coupling member (421) includes a flange portion (423) having a cross-sectional area larger than a cross-sectional area of the through-hole (211a).

15. The electronic device (101) of any one of claims 1 to 14,
wherein the housing (220) and the support (410) are curved to have a shape corresponding to the part of the user's body.
